(19) Europäisches Patentamt
European Patent Office
Office européen des brevets

(11) EP 2 679 626 B1

(12) **EUROPEAN PATENT SPECIFICATION**

(45) Date of publication and mention of the grant of the patent:
**08.06.2016 Bulletin 2016/23**

(21) Application number: **12749997.8**

(22) Date of filing: **23.02.2012**

(51) Int Cl.:
***C08L 9/00*** (2006.01) ***B60C 1/00*** (2006.01)
***C08K 3/00*** (2006.01) ***C08K 5/09*** (2006.01)

(86) International application number:
**PCT/JP2012/054476**

(87) International publication number:
**WO 2012/115211 (30.08.2012 Gazette 2012/35)**

(54) **RUBBER COMPOSITION AND TIRE PRODUCED USING SAME, AND PROCESS OF PRODUCING RUBBER COMPOSITION**

KAUTSCHUKZUSAMMENSETZUNG UND DARAUS HERGESTELLTER REIFEN SOWIE VERFAHREN ZUR HERSTELLUNG DER KAUTSCHUKZUSAMMENSETZUNG

COMPOSITION DE CAOUTCHOUC ET PNEU OBTENU À L'AIDE DE CELLE-CI, ET PROCÉDÉ DE FABRICATION D'UNE COMPOSITION DE CAOUTCHOUC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.02.2011 JP 2011037714**
**23.02.2011 JP 2011037715**
**25.05.2011 JP 2011116866**

(43) Date of publication of application:
**01.01.2014 Bulletin 2014/01**

(60) Divisional application:
**14179154.1 / 2 799 482**
**16152480.6 / 3 029 099**

(73) Proprietor: **Bridgestone Corporation**
**Tokyo 104-8340 (JP)**

(72) Inventors:
- **SUZUKI, Eiju**
**1-1, Kyobashi 3-chome,**
**Chuo-ku,**
**Tokyo 1048340 (JP)**
- **ITOH, Yuki**
**1-1, Kyobashi 3-chome,**
**Chuo-ku,**
**Tokyo 1048340 (JP)**
- **TAMATE, Ryouta**
**1-1, Kyobashi 3-chome,**
**Chuo-ku,**
**Tokyo 1048340 (JP)**

(74) Representative: **Oxley, Robin John George et al**
**Marks & Clerk LLP**
**90 Long Acre**
**London WC2E 9RA (GB)**

(56) References cited:
**EP-A1- 1 736 507**
**WO-A1-2008/123306**
**WO-A1-2009/084667**
**JP-A- 2003 521 575**
**US-A1- 2005 049 127**

EP 2 679 626 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to a rubber composition and a tire produced using the same. More specifically, the present invention relates to a rubber composition that has a reduced hysteresis loss, and is capable of providing a tire that has good rolling resistance and excellent in wear resistance, and a tire produced using the same.

### Background Art

In connection with the recent global trend of reduction of carbon dioxide emission associated with the social demand for energy saving and the increasing interest in environmental issues, there are rising severe demands on enhancement of wear resistance, which may contribute to reduction of fuel consumption and resource saving of automobiles. For addressing the demands, tires are demanded to reduce rolling resistance. The use of a low heat build-up material has been the most common measure for reducing the rolling resistance of tires while measures have been investigated by optimizing the tire structure.
For providing a rubber composition having low heat build-up, many technical developments have been made on modified rubber for a rubber composition containing silica or carbon black as a filler. Among these, a method of modifying a polymerizable terminal of a conjugated diene, which is obtained by anion polymerization with an organic lithium compound, with an alkoxysilane derivative having a functional group capable of interacting with a filler has been proposed as an effective measure (see, for example, PTL 1, 2 and 3).
The alkoxysilane derivative in all the cases is a silicon compound that has in the molecule thereof an alkoxy group that is bonded directly to the silicon atom and also contains a nitrogen-containing functional group capable of interacting with a filler, and a modified conjugated diene polymer having a polymerizable terminal that is modified therewith exhibits reduction of the rolling resistance of tires and enhancement of the breaking property and wear resistance of tires. However, in view of the energy saving and the environmental issues in recent years, there is a demand for further reduction of fuel consumption of automobiles (i.e., the reduction of the rolling resistance of tires) and enhancement of the wear resistance.
There has been disclosed that on emulsion polymerization of styrene and butadiene, the amount of the emulsifier contained in the polymer is limited to the particular range (from 1 to 3.5 phr), thereby enhancing the wear resistance (see, for example, PTL 4 and 5).
As described above, the use of an inorganic filler, such as silica, as a filler has been known as a method for providing a low heat build-up rubber composition.
In the rubber composition containing an inorganic filler, however, a silane coupling agent is used for preventing the inorganic filler from being aggregated in the rubber composition since the inorganic filler, particularly silica, is aggregated in the rubber composition (due to the hydroxyl group on the surface of silica).
Accordingly, for appropriately solve the problems by adding a silane coupling agent, various attempts have been made for enhancing the coupling function of the silane coupling agent.
For example, PTL 6 discloses a rubber composition containing as basic components at least (i) one kind of a diene elastomer, (ii) a white filler as a reinforcing filler and (iii) polysulfide alkoxysilane as a coupling agent (for the white filler and the diene elastomer), along with (iv) an enamine and (v) a guanidine derivative.
PTL 7 discloses a rubber composition containing as basic components at least (i) one kind of a diene elastomer, (ii) a white filler as a reinforcing filler and (iii) a polysulfide alkoxysilane as a coupling agent (for the white filler and the diene elastomer), along with (iv) zinc dithiophosphate and (v) a guanidine derivative.
PTL 8 discloses a rubber composition containing at least as a base (i) a diene elastomer, (ii) an inorganic filler as a reinforcing filler and (iii) a polysulfide alkoxysilane (PSAS) as a coupling agent (for the inorganic filler and the diene elastomer), which are used in combination with (iv) an aldimine (R-CH=N-R) and (v) a guanidine derivative.
PTL 9 proposes a rubber composition based on at least (i) a diene elastomer, (ii) an inorganic filler as a reinforcing filler and (iii) a polysulfide alkoxysilane as a coupling agent, which contains also (iv) 1,2-dihydropyridine and (v) a guanidine derivative.
However, these inventions do not consider the kneading conditions.
PTL 10 discloses an example of enhancement of the activity of the coupling function of the silane coupling agent by considering the kneading conditions, but does not consider prevention of reduction of enhancement of the activity of the coupling function of the silane coupling agent due to the other mixed components.
As described above, the improvement of the low heat build-up property of the rubber component is demanded in a rubber composition containing emulsion-polymerized styrene-butadiene copolymer rubber. For example, PTL 11 attempts to enhance the wear resistance and the low heat build-up property of emulsion-polymerized styrene-butadiene copolymer rubber by controlling the amount of an organic acid therein. However, there is no consideration of the kneading

conditions.

PTL 12 relates to a rubber composition for a studless tire tread. PTL13 relates to a roller member that has a conductive elastic member. PTL14 relates to a tyre tread comprising a crosslinkable rubber composition comprising at least a styrene and a butadiene copolymer.

## Citation List

### Patent Literatures

PTL 1: JP-A-2002-10392
PTL 2: WO 2002/002356
PTL 3: JP-A-2004-74960
PTL 4: JP-A-2003-521574
PTL 5: JP-A-2003-521575
PTL 6: JP-A-2002-521515
PTL 7: JP-A-2002-521516
PTL 8: JP-A-2003-530443
PTL 9: JP-A-2003-523472
PTL 10: WO 2008/123306
PTL 11: JP-A-2003-521575 PTL 12: EP1736507
PTL 13: US2005/049127
PTL 14: WO 2001/056813


## Summary of Invention

### Technical Problem

Under the circumstances, an object of the present invention is to provide a rubber composition that is excellent in low heat build-up property and wear resistance by defining the total amount of an acidic component with respect to the total mixed rubber, including an organic acid, such as stearic acid, and an organic acid contained in a residue of an emulsifier added in a production process of emulsion-polymerized SBR, and a tire produced by using the composition, having the aforementioned properties.

Another object of the present invention is to provide a process of producing a rubber composition that favorably suppresses the activity reduction of a coupling function of a silane coupling agent in a rubber composition containing emulsion-polymerized styrene-butadiene copolymer rubber for further enhancing the coupling function, thereby providing a rubber composition having favorable low heat build-up property.

### Solution to Problem

As a result of earnest investigations for solving the problems, the present inventors have found that the objects may be attained by defining the total amount, with respect to the total mixed rubber, of an organic acid as an acidic component, such as stearic acid, used as a vulcanization accelerating aid, and an organic acid as an acidic component contained in a residue of an organic acid added in a production process of a polymer, such as emulsion-polymerized styrene-butadiene copolymer rubber (E-SBR).

Furthermore, as a result of various experiments, in the first step of a kneading step, of mixing a rubber component containing emulsion-polymerized styrene-butadiene copolymer rubber, the whole or a part of an inorganic filler, the whole or a part of a silane coupling agent, and at least one vulcanization accelerator selected from a guanidine compound, a sulfenamide compound and a thiazole compound, the present inventors have also found that even when at least one vulcanization accelerator selected from a guanidine compound, a sulfenamide compound and a thiazole compound is mixed, there are a case where the effect of enhancing the activity of the coupling function is high and a case where the effect is low. As a result of various experimental analysis on the factors enhancing the effect, it has been experimentally found that the activity of the coupling function may be enhanced by controlling, in the first step of the kneading step, the mixed amount of the total organic acid including an organic acid in the emulsion-polymerized styrene-butadiene copolymer rubber, and the mixed amount of at least one vulcanization accelerator selected from a guanidine compound, a sulfenamide compound and a thiazole compound. The present invention has been completed based on the findings.

The present invention relates to:

(1) a rubber composition containing at least 10 parts by mass, in a rubber component, of a polymer component (B) containing a residue of an organic acid (A) added in a production process of the polymer, and containing from 10 to 150 parts by mass of a reinforcing filler (C), and 0.1 to 6 parts by mass in total of the residue of an organic acid (A) and an organic acid (D) used on mixing, per 100 parts by mass of the rubber component;
wherein the rubber composition contains from 5 to 90 parts by mass of a modified polymer (F) containing in a molecular structure thereof a modified portion (E) capable of reacting with a surface of the filler in a mixing step, in 100 parts by mass of the rubber component; and
wherein the modified portion (E) contains a functional group capable of undergoing acid-base reaction in the mixing step with the residue of an organic acid (A) and/or the organic acid (D) added on mixing.
(2) the rubber composition according to the item (1), wherein the rubber composition contains 3.5 parts by mass or less of the component (A) per 100 parts by mass of the polymer component (B);
(3) the rubber composition according to the item (2), wherein the rubber composition contains 1.0 part by mass or less of the component (A) per 100 parts by mass of the polymer component (B);
(4) the rubber composition according to any one of the items (1) to (3), wherein the component (B) is a synthetic diene polymer;
(5) the rubber composition according to the item (4), wherein the component (B) is a synthetic diene polymer that is obtained by emulsion polymerization;
(6) the rubber composition according to the item (5), wherein the component (B) is a styrene-butadiene copolymer that is obtained by emulsion polymerization (E-SBR);
(7) the rubber composition according to the items (1) to (6), wherein the modified portion (E) contains a functional group capable of undergoing acid-base reaction in the mixing step with the reinforcing filler (C);
(8) the rubber composition according to item (7), wherein the modified portion (E) is capable of undergoing acid-base reaction in the mixing step with the residue of an organic acid (A) and/or the organic acid (D) added on mixing, to form an onium cation;
(9) the rubber composition according to any one of the items (7) to (8), wherein the modified portion (E) contains a nitrogen-containing functional group;
(10) the rubber composition according to the item (9), wherein the nitrogen-containing group contains at least one selected from an amino group, an imino group, a pyridyl group, a nitrile group, a hydrazine group, an amidine group, an amidrazone group, a urea group and a thiourea group;
(11) the rubber composition according to any one of items 1 to 10, wherein the component (D) contains a fatty acid compound;
(12) the rubber composition according to any one of items 1 to 11, wherein the residue of an organic acid (A) added in a production process of the polymer as the component (B) contains at least one of a fatty acid compound, a resin acid compound, a carbolic acid compound and a rosin acid compound;
(13) the rubber composition according to any one of items 1 to 12, wherein the residue of an organic acid (A) added in a production process of the polymer as the component (B) contains a metal salt of a fatty acid compound, a metal salt of a resin acid compound, a metal salt of a carbolic acid compound or a metal salt of a rosin acid compound;
(14) a tire containing the rubber composition according to any one of the items (1) to (13) as a tread member or a sidewall member;
(15) a process of producing a rubber composition containing a rubber component (R) containing emulsion-polymerized styrene-butadiene copolymer rubber containing from 0.1 to 3.5 parts by mass of an organic acid per 100 parts by mass of the emulsion-polymerized styrene-butadiene copolymer rubber, a filler containing an inorganic filler (T), a silane coupling agent (U), and at least one vulcanization accelerator (V) selected from a guanidine compound, a sulfenamide compound and a thiazole compound, the process containing plural steps of kneading the rubber composition, and the rubber component (R), the whole or a part of the inorganic filler (T), the whole or a part of the silane coupling agent (U) and the vulcanization accelerator (V) being added and kneaded in a first step (X) of kneading; and
(16) a process of producing a rubber composition containing a rubber component (R) containing emulsion-polymerized styrene-butadiene copolymer rubber containing from 0.1 to 3.5 parts by mass of an organic acid per 100 parts by mass of the emulsion-polymerized styrene-butadiene copolymer rubber, a filler containing an inorganic filler (T), a silane coupling agent (U), and at least one vulcanization accelerator (V) selected from a guanidine compound, a sulfenamide compound and a thiazole compound, the process containing three or more steps of kneading the rubber composition, the rubber component (R), the whole or a part of the inorganic filler (T) and the whole or a part of the silane coupling agent (U) being added and kneaded in a first step (X) of kneading, the vulcanization accelerator (V) being added and kneaded in a step (Y) that is a second or later step before a final step, and a vulcanizing agent being added and kneaded in the final step (Z).

## Advantageous Effects of Invention

According to the present invention, the total amount, with respect to the total mixed rubber, of the acid component including an organic acid, such as stearic acid, and an organic acid contained in a residue of an emulsifier added in a production process of an emulsion-polymerized SBR is defined, and thereby the low heat build-up property and the wear resistance of the tire may be improved.

Specifically, the low heat build-up property and the wear resistance may be improved by suppressing the amount of the acid component used.

Furthermore, in the presence of a modified polymer containing in a molecular structure thereof a modified portion (E) capable of reacting with the surface of the filler in the mixing step, the total amount of the residue of the organic acid added in the production process of the polymer and the organic acid added on mixing may be suppressed, a residue of an organic acid added in a production process of a polymer may be used effectively and thereby the low heat build-up property and the wear resistance of the rubber composition may be improved, and simultaneously a tire containing the rubber composition as a tread or sidewall member may be further improved.

Specifically, the number of the modified groups that are neutralized with the acid component may be decreased by suppressing the amount of the organic acid component, and thereby a larger proportion of the modified groups present are not neutralized but are served as dispersion and reinforcement of the filler, which may further improve the low heat build-up property and the wear resistance.

According to the production process of a rubber composition of the present invention, activity reduction of the coupling function of the silane coupling agent may be favorably suppressed in a rubber composition containing emulsion-polymerized styrene-butadiene copolymer rubber, and thus the activity of the coupling function thereof may be further enhanced, thereby providing a rubber composition excellent in low heat build-up property.

## Description of Embodiments

The rubber composition of the present invention will be described.

### Rubber Composition

The rubber composition of the present invention contains at least 10 parts by mass, in a rubber component, of a polymer component (B) containing a residue of an organic acid (A) added in a production process of the polymer, and contains from 10 to 150 parts by mass of a reinforcing filler (C), and 0.1 to 6 parts by mass in total of the residue of an organic acid (A) and an organic acid (D) used on mixing, per 100 parts by mass of the rubber component.

The lower limit of the total amount is is 0.1 part by mass. The advantageous effects of the present invention may be obtained by defining the total amount of the residue of an organic acid (A) and an organic acid (D) in the entire mixed system within the above range.

The amount of the organic acid residue as the component (A) may be 3.5 parts by mass or less, more preferably 3.0 parts by mass or less, and further preferably 1.0 part by mass or less, per 100 parts by mass of the polymer component (B).

The total amount of the component (A) and the component (D) is 0.1 to 6 parts by mass, preferably 3.5 parts by mass or less, more preferably 2.7 parts by mass or less, and particularly preferably 1.8 parts by mass or less, per 100 parts by mass of the rubber component containing at least 10 parts by mass, in a rubber component, of the polymer component (B).

The rubber composition of the present invention contains a rubber component containing from 5 to 90 parts by mass of a modified polymer (F) containing in a molecular structure thereof a modified portion (E) capable of reacting with a surface of the filler in a mixing step. It is preferred that the rubber composition of the present invention contains from 95 to 10 parts by mass of the other polymer component (B), in which the polymer component (B) contains a residue of an organic acid (A) added in a production process of the polymer, and the rubber composition contains from 10 to 150 parts by mass of a reinforcing filler (C), and 3.5 parts by mass or less in total of the component (A) and an organic acid (D) added on mixing, per 100 parts by mass of the rubber component. The number of the modified groups that are neutralized with the acid component may be decreased by suppressing the total amount of the residue of an organic acid (A) added in a production process of the polymer and the organic acid (D) added on mixing, and thereby a larger proportion of the modified groups present are not neutralized but are served as dispersion and reinforcement of the filler, which may further improve the low heat build-up property and the wear resistance.

### Residue of Organic Acid (A) added in Production process of Polymer

Styrene-butadiene copolymer rubber has been used as versatile synthetic rubber in a tread of a tire. The

styrene-butadiene copolymer rubber is roughly classified by the production method thereof into emulsion-polymerized styrene-butadiene copolymer rubber (E-SBR) polymerized with a soap micelle with water as a medium and solution-polymerized styrene-butadiene copolymer rubber (S-SBR) polymerized with a hydrocarbon compound as a medium.

E-SBR is produced by an emulsion polymerization method, in which styrene and butadiene are emulsified with a soap with water as a medium and copolymerized. The method is classified by the polymerization temperature into a hot polymerization method and a cold polymerization method (with a redox catalyst), and most of E-SBR is currently produced by the cold polymerization method.

In the cold polymerization method, the monomer is reacted at 5°C until a polymerization conversion of 60%. The cold polymerization method, which is characterized by the use of a heterogeneous rosinate soap as an emulsifier, exhibits a large polymerization rate, and resulting rubber is improved in adhesiveness and is excellent in processability. However, the method has a defect of coloration of rubber, and a combination system with a fatty acid soap has been widely used for non-contaminated rubber.

E-SBR that is ordinarily used contains the soap as a residue of an organic acid (A). The residue of an organic acid (A) is not actively removed since the processability on a mixing step is improved, and in general, from 4 to 8% of an organic acid is contained as a residue.

Solution-polymerized diene rubber or the like does not contain the residue, and in the case where solution-polymerized diene rubber is used as a rubber composition, an organic acid (D), such as stearic acid, is generally added as a vulcanization accelerating aid. In the case where a mixture of diene rubber obtained by emulsion polymerization and diene rubber obtained by solution polymerization is used as a rubber component, the residue of an organic acid (A) added in the production process of the polymer and the organic acid (D) added on mixing are also mixed, and it is thus important that the total amount of the component (A) and the component (D) thus mixed is controlled, and thereby the residue of an organic acid (A) added in the production process of the polymer is used effectively.

For example, in the case where 50 parts by mass of S-SBR and 50 parts by mass of E-SBR are mixed in a rubber component, the S-SBR contains no organic acid, and when the amount of the residue of an organic acid (A) in the E-SBR is from 0.1 to 6 parts by mass in terms of the organic acid per 100 parts by mass of the rubber component, the rubber composition is in the scope of the present invention without addition of stearic acid as a vulcanization accelerating aid, and the organic acid as the component (A) may be utilized as a vulcanization accelerating aid.

When the total amount of the component (D) and the component (A) is in a range of from 0.1 to 6 parts by mass, the rubber composition is in the scope of the present invention.

Polymer Component (B)

The residue of an organic acid (A) is preferably contained in an amount of 3.5 parts by mass or less, and more preferably 1.0 part by mass or less, per 100 parts by mass of the polymer component (B). The lower limit thereof is not particularly limited and is generally approximately 0.1 parts by mass.

When the content of the component (A) per 100 parts by mass of the polymer component (B) is in the range, the low heat build-up property of the rubber composition may be ensured, and the wear resistance thereof may be enhanced.

The polymer component (B) is preferably a synthetic diene polymer.

Examples of the conjugated diene compound include 1,3-butadiene, isoprene, 1,3-pentadiene, 2,3-dimethyl-1,3-butadiene, 2-phenyl-1,3-butadiene and 1,3-hexadiene. These compounds may be used solely or as a combination of two or more kinds thereof, and among these, 1,3-butadiene, isoprene and 2,3-dimethyl-1,3-butadiene are particularly preferred.

Examples of an aromatic vinyl compound that is used for copolymerization with the conjugated diene compound include styrene, $\alpha$-methylstyrene, 1-vinylnaphthalene, 3-vinyltoluene, ethylvinylbenzene, divinylbenzene, 4-cyclohexylstyrene and 2,4,6-trimethylstyrene. These compounds may be used solely or as a combination of two or more kinds thereof, and among these, styrene is particularly preferred.

The polymer component (B) is more preferably a styrene-butadiene copolymer, which is a synthetic diene polymer obtained by a cold polymerization method of emulsion polymerization (E-SBR).

Other examples of the polymer component (B) obtained by emulsion polymerization include a terpolymer obtained by copolymerizing styrene and butadiene monomers with the following monomer. Representative examples of the monomer include protected 4-vinylaniline (primary amine) and protected anilinostyrene (secondary amine).

Examples of a vinyl monomer having a pyridyl group include 2-vinylpyridine, 3-vinylpyridine, 4-vinylpyridine, 5-methyl-2-vinylpyridine and 5-ethyl-2-vinylpyridine, and 2-vinylpyridine, 4-vinylpyridine and the like are preferred.

Examples of a conjugated diene modified monomer include anilinophenylbutadiene, 1-anilinophenyl-1,3-butadiene, 1-anilinophenyl-3-methyl-1,3-butadiene, 1-anilinophenyl-3-chloro-1,3-butadiene, 3-anilinophenyl-2-methyl-1,3-butadiene, 1-anilinophenyl-2-chloro-1,3-butadiene, 2-anilinophenyl-1,3-butadiene, 2-anilinophenyl-3-methyl-1,3-butadiene and 2-anilinophenyl-3-chloro-1,3-butadiene.

Synthesis of Modified Polymer (F) containing in Molecular Structure Thereof Modified Portion (E) capable of reacting with Surface of Filler in Mixing Step

Modified Portion (E) capable of reacting with Surface of Filler in Mixing Step

The modified portion (E) of the modified polymer (F) that is used in the present invention contains a functional group capable of undergoing acid-base reaction in the mixing step with the residue of an organic acid (A) and/or the organic acid (D) added on mixing.

The modified portion (E) also preferably contains a functional group capable of undergoing acid-base reaction in the mixing step with the reinforcing filler (C).

The modified portion (E) preferably is capable of undergoing acid-base reaction in the mixing step with the residue of an organic acid (A) and/or the organic acid (D) added on mixing, to form an onium cation. When the modified portion (E) contains the functional groups, the low heat build-up property and the wear resistance of the rubber composition may be further enhanced.

In this point of view, the modified portion (E) preferably contains a nitrogen-containing functional group containing a nitrogen atom which is a heteroatom, and preferred examples of the nitrogen-containing functional group include an amino group, an imino group, a pyridyl group, a nitrile group, a hydrazine group, an amidine group, an amidrazone group, a urea group and a thiourea group.

Modified Polymer (F) containing in Molecular Structure Thereof Modified Portion (E)

The rubber composition of the present invention contains from 5 to 90 parts by mass of the modified polymer (F) containing in a molecular structure thereof the modified portion (E) capable of reacting with the surface of the filler in the mixing step, in 100 parts by mass of the rubber component.

The modified polymer (F) may be obtained in such a manner that a conjugated diene compound solely is or a conjugated diene compound and an aromatic vinyl compound are subjected to anion polymerization in an organic solvent with an organic alkali metal compound as an initiator to form conjugated diene synthetic rubber, and the active anion portion of the conjugated diene synthetic rubber is then reacted with a compound that has in one molecule thereof a functional group capable of forming a bond with the active anion portion and a functional group capable of forming the modified portion (E) capable of reacting with the surface of the filler.

The metal in the active portion present in the molecule of the conjugated diene synthetic rubber is preferably at least one selected from an alkali metal and an alkaline earth metal, and among these, an alkali metal is preferred, and lithium is particularly preferred.

In the solution polymerization method, a conjugated diene compound solely or a conjugated diene compound and an aromatic vinyl compound may be subjected to anion polymerization, for example, with an organic alkali metal compound, particularly a lithium compound, as an initiator, thereby providing the target polymer.

Examples of Monomer

Examples of the conjugated diene compound include 1,3-butadiene, isoprene, 1,3-pentadiene, 2,3-dimethyl-1,3-butadiene, 2-phenyl-1,3-butadiene and 1,3-hexadiene. These compounds may be used solely or as a combination of two or more kinds thereof, and among these, 1,3-butadiene, isoprene and 2,3-dimethyl-1,3-butadiene are particularly preferred.

Examples of the aromatic vinyl compound that is used for copolymerization with the conjugated diene compound include styrene, $\alpha$-methylstyrene, 1-vinylnaphthalene, 3-vinyltoluene, ethylvinylbenzene, divinylbenzene, 4-cyclohexylstyrene and 2,4,6-trimethylstyrene. These compounds may be used solely or as a combination of two or more kinds thereof, and among these, styrene is particularly preferred.

In the case where the conjugated diene compound and the aromatic vinyl compound as monomers are copolymerized, the use of 1,3-butadiene and styrene is particularly preferred since they are excellent in the practicality including the availability of the monomers, and in the living property in the anion polymerization.

In the case where a solution polymerization method is employed, the monomer concentration in the solvent is preferably from 5 to 50% by mass, and more preferably from 10 to 30% by mass. In the case where the conjugated diene compound and the aromatic vinyl compound are copolymerized, the content of the aromatic vinyl compound in the charged monomer mixture is preferably in a range of from 0 to 55% by mass, and is preferably 45% by mass or less, and more preferably 40% by mass or less.

Polymerization Initiator

The lithium compound as the polymerization initiator is not particularly limited, and a hydrocarbyllithium and a lithium amide compound are preferably used. The use of the former compound, i.e., a hydrocarbyllithium, provides the conjugated diene polymer that has a hydrocarbyl group at the polymerization initiation terminal and a polymerization active portion at the other terminal. The use of the later compound, i.e., a lithium amide compound, provides the conjugated diene polymer that has a nitrogen-containing group at the polymerization initiation terminal and a polymerization active portion at the other terminal.
The hydrocarbyllithium preferably has a hydrocarbyl group having from 2 to 20 carbon atoms, examples of which include ethyllithium, n-propyllithium, isopropyllithium, n-butyllithium, sec-butyllithium, tert-octyllithium, n-decyllithium, phenyllithium, 2-naphthyllithium, 2-butylphenyllithium, 4-phenylbutyllithium, cyclohexyllithium, cyclopentyllithium, and a reaction product of diisopropenylbenzene and butyllithium, and among these, n-butyllithium is particularly preferred.

Nitrogen-containing Lithium Amide Compound

Examples of the nitrogen-containing lithium amide compound include compounds represented by the general formula (1) and the general formula (2) below.

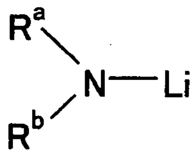
···(1)

wherein $R^a$ and $R^b$ each are selected from the group consisting of alkyl, cycloalkyl and aralkyl each having from 1 to 12 carbon atoms, and may be the same as or different from each other, and Li represents lithium,

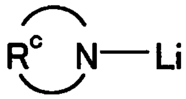
···(2)

wherein $R^c$ is one selected from the group consisting of alkylene and oxy- or aminoalkylene groups each having from 3 to 12 methylene groups, and Li represents lithium.
Examples of the lithium amide compound represented by the general formulae (1) and (2) include lithium hexamethyleneimide, lithium pyrrolidide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium N-methylpiperazide, lithium ethylpropylamide, lithium ethylbutylamide, lithium ethylbenzylamide and lithium methylphenethylamide. Among these, a cyclic lithium amide, such as lithium hexamethyleneimide, lithium pyrrolidide, lithium piperidide, lithium heptamethyleneimide and lithium dodecamethyleneimide, is preferred, and lithium hexamethyleneimide and lithium pyrrolidide are particularly preferred.
The lithium amide compound that is prepared in advance from a secondary amine and a lithium compound may be generally used in the polymerization, and may be also prepared in the polymerization system (in-situ). The amount of the polymerization initiator used is preferably selected from a range of from 0.2 to 20 mmol per 100 g of the monomer.
The method of producing the conjugated diene polymer through anion polymerization using the lithium compound as a polymerization initiator is not particularly limited, and any known method may be employed.
Specifically, the target conjugated diene polymer may be obtained in such a manner that the conjugated diene compound is or the conjugated diene compound and the aromatic vinyl compound are subjected to anion polymerization in an organic solvent that is inert to the reaction, for example, a hydrocarbon solvent, such as an aliphatic, alicyclic or aromatic hydrocarbon compound, with the lithium compound as a polymerization initiator, in the presence of a randomizer depending on necessity.

Solvent

The hydrocarbon solvent preferably has from 3 to 8 carbon atoms, and examples thereof include propane, n-butane, isobutane, n-pentane, isopentane, n-hexane, cyclohexane, propene, 1-butene, isobutene, trans-2-butene, cis-2-butene, 1-pentene, 2-pentene and potassium tert-butoxide, 1-hexene, 2-hexene, benzene, toluene, xylene and ethylbenzene. These compounds may be used solely or as a mixture of two or more kinds thereof.

Randomizer

The randomizer, which may be used depending on necessity, is a compound having a function of controlling the microscopic structure of the conjugated diene polymer, for example, increase of the 1,2-bond of the butadiene moiety in the butadiene-styrene copolymer and the 3,4-bond of the isoprene polymer, or a function of controlling the compositional distribution of the monomer units in the copolymer of the conjugated diene compound and the aromatic vinyl compound, for example, randomization of the butadiene unit and the styrene unit in the butadiene-styrene copolymer. The randomizer is not particularly limited, and an arbitrary compound may be selected from known compounds that have been used as a randomizer. Specific examples thereof include an ether compound and a tertiary amine compound, for example, dimethoxybenzene, tetrahydrofuran, dimethoxyethane, diethylene glycol dibutyl ether, diethylene glycol dimethyl ether, 2,2-bis(2-tetrahydrofuryl)propane, triethylamine, pyridine, N-methylmorpholine, N,N,N',N'-tetramethylethylenediamine and 1,2-dipiperidinoethane. A potassium salt, such as potassium tert-amylate and potassium tert-butoxide, and a sodium salt, such as sodium tert-amylate, may also be used.

The randomizer may be used solely or as a combination of two or more kinds thereof. The amount thereof used is preferably selected from a range of from 0.01 to 1,000 mol equivalent per 1 mol of the lithium compound.

The temperature in the polymerization reaction is preferably selected from a range of from 0 to 150°C, and more preferably from 20 to 130°C. The polymerization reaction may be performed under pressure generated, and in general, is preferably performed under such a pressure that is sufficient for maintaining the monomers substantially in a liquid phase. Specifically, a higher pressure may be used on necessity while it depends on the substances to be polymerized and the polymerization medium and the polymerization temperature used, and the pressure may be obtained by an appropriate measure, for example, compression of the reactor with a gas that is inert to the polymerization reaction.

In the polymerization, reaction inhibitors, such as water, oxygen, carbon dioxide and a protonic compound, are preferably removed from all the materials that engage with the polymerization, such as the polymerization initiator, the solvent and the monomers.

The conjugated diene polymer thus obtained preferably has a glass transition temperature (Tg) obtained by differential thermal analysis of from -95 to - 15°C. When the glass transition temperature is in the range, such a conjugated diene polymer may be obtained that is suppressed in increase of the viscosity and has good handleability.

Modifying Agent

Functional Group capable of forming Bond with Active Anion Portion of Polymer Intermediate

The functional group may be a functional group represented by C=X (wherein X represents one selected from a carbon atom, a nitrogen atom and a sulfur atom) or a functional group represented by $SiR_nY_{(3-n)}$ (wherein R represents a hydrocarbyl group having from 1 to 18 carbon atoms, provided that when there are plural groups of R, the groups may be the same as or different from each other, Y represents a halogen group or a hydrocarbyloxy group having from 1 to 18 carbon atoms, provided that when there are plural groups of Y, the groups may be the same as or different from each other, and n represents a number of from 1 to 3).

Examples of the C=X type modifying agent include 4-diethylaminobenzophenone, 4,4-bis(diethylamino)benzophenone, 1,3-dimethyl-2-imidazoline, 1,3-dimethyl-2-imidazoline-2-thione, 1-methylpyrrolidone, 1-methylpyrrolidone-2-thione, 1-methylsilylpyrrolidone, methylenebis(1,4-phenylene) diisocyanate and hexamethylene diisocyanate. Compounds obtained by replacing the methyl, ethyl or the like in the aforementioned compounds by another alkyl group may also be used.

In the functional group represented by $SiR_nY_{(3-n)}$, R represents a hydrocarbyl group having from 1 to 18 carbon atoms, and Y represents a halogen group or a hydrocarbyloxy group having from 1 to 18 carbon atoms, examples of which include an alkoxy group or an alkenyloxy group having from 1 to 18 carbon atoms, an aryloxy group having from 6 to 18 carbon atoms and an aralkyloxy group having from 7 to 18 carbon atoms, and among these, an alkoxy group having from 1 to 10 carbon atoms is preferred since it has favorable reactivity. The alkyl group constituting the alkoxy group may be any of linear, branched and cyclic. Examples of the alkoxy group include an ethoxy group, a n-propoxy group, an isopropoxy group, a n-butoxy group, an isobutoxy group, a sec-butoxy group, a tert-butoxy group, various pentoxy groups, various hexoxy groups, various heptoxy groups, various octoxy groups, various decyloxy groups, a cyclopentyloxy group and a cyclohexyloxy group, and among these, an alkoxy group having from 1 to 6 carbon atoms is preferred from the standpoint of the reactivity.

Examples of the hydrocarbyl group having from 1 to 18 carbon atoms represented by R include an alkyl group having from 1 to 18 carbon atoms, an alkenyl group having from 2 to 18 carbon atoms, an aryl group having from 6 to

18 carbon atoms and an aralkyl group having from 7 to 18 carbon atoms, and among these, an alkyl group having from 1 to 18 carbon atoms is preferred, and an alkyl group having from 1 to 10 carbon atoms is more preferred, from the standpoint of the reactivity and the capability of the modifying agent. The alkyl group may be any of linear, branched and cyclic, and examples thereof include a methyl group, an ethyl group, a n-propyl group, an isopropyl group, a n-butyl group, an isobutyl group, a sec-butyl group, a tert-butyl group, various pentyl groups, various hexyl groups, various octyl groups, various decyl groups, a cyclopentyl group and a cyclohexyl group. Among these, an alkyl group having from 1 to 6 carbon atoms is preferred, and a methyl group is particularly preferred, from the standpoint of the reactivity and the capability of the modifying agent.

Modified Portion (E) capable of reacting with Surface of Filler in Mixing Step

The modified portion (E) capable of reacting with the surface of the filler in the mixing step is preferably a nitrogen-containing functional group, as described above.

Examples of the nitrogen-containing functional group constituting the modified portion (E) include a protected primary amino group, a protected secondary amino group, a tertiary amino group, an imino group, a ketimino group, an aldimino group, a pyridyl group, a nitrile group, an isocyanate group, a hydrazine group, an amidine group, an amidrazone group, a urea group and a thiourea group.

Examples of the saturated cyclic tertiary amine compound residual group in the nitrogen-containing modified portion (E) include a hexamethyleneimino group, a pyrrolidinyl group, a piperidinyl group, a heptamethyleneimino group and a dodecamethyleneimino group, and examples of the unsaturated cyclic tertiary amine compound residual group therein include an imidazole residual group, a dihydroimidazole residual group, an oxazole residual group and a pyridyl group.

The nitrogen-containing modified portion (E) is preferably a monovalent group having at least one nitrogen-containing functional group selected from a ketimine residual group, a saturated cyclic tertiary amine compound residual group, an imidazole residual group, a dihydroimidazole residual group, a pyridyl group, a nitrile group, an isocyanate group, and a secondary amino group, that has a detachable functional group, and more preferably a monovalent group having at least one selected from a saturated cyclic tertiary amine compound residual group, a ketimine residual group, an imidazole residual group, a dihydroimidazole residual group, and a primary amino group and a secondary amino group that each have a detachable functional group.

Examples of the protected primary amino group that may be deprotected in the nitrogen-containing modified portion (E) in the monovalent group shown by the nitrogen-containing modified portion (E) include an N,N-bis(trimethylsilyl)amino group and a 2,2,5,5-tetramethyl-1-aza-2,5-disilacyclopentane group, and examples of the secondary amino group therein include an N-(trimethylsilyl)amino group.

The modifying agent used in the present invention performs reaction of a compound having in one molecule thereof a functional group that forms a bond between the active terminal of the conjugated diene synthetic rubber obtained by anion polymerization and the active anion portion of the polymer intermediate, and the nitrogen-containing functional group. The compound may be a monomeric compound that has the functional group that forms a bond to the active anion portion of the polymer intermediate and the modified portion (E), which are bonded through a divalent hydrocarbyl group having from 1 to 20 carbon atoms, and the divalent hydrocarbyl group having from 1 to 20 carbon atoms is preferably an alkanediyl group having from 1 to 20 carbon atoms, more preferably an alkanediyl group having from 2 to 10 carbon atoms, and further preferably an alkanediyl group having from 2 to 6 carbon atoms, from the standpoint of the capability of the modifying agent.

Examples of the compound include a hydrocarbyloxysilane compound having a protected primary amino group having two trialkylsilyl groups each represented by $-SiR^eR^fR^g$ ($R^e$, $R^f$ and $R^g$ each independently represent an alkyl group having from 1 to 12 carbon atoms, and preferably a methyl group, an ethyl group, a propyl group, a propyl group or a butyl group) as the protective groups of the modified portion (E) having a protective group. In the case where the compound has the protected primary amino group, examples thereof include N,N-bis(trimethylsilyl)aminopropylmethyldimethoxysilane, 1-trimethylsilyl-2,2-dimethoxy-1-aza-2-silacyclopentane, N,N-bis(trimethylsilyl)aminopropyltrimethoxysilane, N,N-bis(trimethylsilyl)aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)aminoethyltriethoxysilane, N,N-bis(trimethylsilyl)aminoethylmethyldimethoxysilane and N,N-bis(trimethylsilyl)aminoethylmethyldiethoxysilane, and preferred examples thereof include N,N-bis(trimethylsilyl)aminopropylmethyldimethoxysilane, N,N-bis(trimethylsilyl)aminopropylmethyldiethoxysilane and 1-trimethylsilyl-2,2-dimethoxy-1-aza-2-silacyclopentane.

Examples thereof also include a bifunctional alkoxycyclosilane compound, such as N,N-bis(trimethylsilyl)aminopropyl(methyl)methoxycyclosilane, N,N-bis(trimethylsilyl)aminopropyl(methyl)ethoxycyclosilane, N,N-bis(trimethylsilyl)aminoethyl(methyl)methoxycyclosilane and N,N-bis(trimethylsilyl)aminoethyl(methyl)ethoxycyclosilane, and a bifunctional chlorosilane compound, such as N,N-bis(trimethylsilyl)aminopropyl(methyl)dichlorosilane, N,N-bis(trimethylsilyl)aminopropyl(methyl)dichlorosilane, N,N-bis(trimethylsilyl)aminoethyl(methyl)dichlorosilane and N,N-bis(trimethylsilyl)aminoethyl(methyl)dichlorosilane.

Examples of the compound include a hydrocarbyloxysilane compound having a protected secondary amino group having one trialkylsilyl group represented by $-SiR^eR^fR^g$ as the protective group of the modified portion (E) having a protective group. Specific examples of the hydrocarbyloxysilane compound having the protected secondary amino group as the modifying agent include N-methyl-N-trimethylsilylaminopropyl(methyl)dimethoxysilane, N-methyl-N-trimethylsilylaminopropyl(methyl)diethoxysilane, N-trimethylsilyl(hexamethyleneimin-2-yl)propyl(methyl)dimethoxysilane, N-trimethylsilyl(hexamethyleneimin-2-yl)propyl(methyl)diethoxysilane, N-trimethylsilyl(pyrrolidin-2-yl)propyl(methyl)dimethoxysilane, N-trimethylsilyl(pyrrolidin-2-yl)propyl(methyl)diethoxysilane, N-trimethylsilyl(piperidin-2-yl)propyl(methyl)dimethoxysilane, N-trimethylsilyl(piperidin-2-yl)propyl(methyl)diethoxysilane, N-trimethylsilyl(imidazol-2-yl)propyl(methyl)dimethoxysilane, N-trimethylsilyl(imidazol-2-yl)propyl(methyl)diethoxysilane, N-trimethylsilyl(4,5-dihydroimidazol-5-yl)propyl(methyl)dimethoxysilane and N-trimethylsilyl(4,5-dihydroimidazol-5-yl)propyl(methyl)diethoxysilane, and preferred examples among these include N-methyl-N-trimethylsilylaminopropyl(methyl)dimethoxysilane and N-methyl-N-trimethylsilylaminopropyl(methyl)diethoxysilane.

Examples thereof also include a chlorosilane compound, such as N-methyl-N-trimethylsilylaminopropyl(methyl)methoxychlorosilane, N-methyl-N-trimethylsilylaminopropyl(methyl)ethoxychlorosilane, N-trimethylsilyl(hexamethyleneimin-2-yl)propyl(methyl)methoxychlorosilane, N-trimethylsilyl(hexamethyleneimin-2-yl)propyl(methyl)ethoxychlorosilane, N-trimethylsilyl(pyrrolidin-2-yl)propyl(methyl)methoxychlorosilane, N-trimethylsilyl(pyrrolidin-2-yl)propyl(methyl)ethoxychlorosilane, N-trimethylsilyl(piperidin-2-yl)propyl(methyl)methoxychlorosilane, N-trimethylsilyl(piperidin-2-yl)propyl(methyl)ethoxychlorosilane, N-trimethylsilyl(imidazol-2-yl)propyl(methyl)methoxychlorosilane, N-trimethylsilyl(imidazol-2-yl)propyl(methyl)ethoxychlorosilane, N-trimethylsilyl(4,5-dihydroimidazol-5-yl)propyl(methyl)methoxychlorosilane and N-trimethylsilyl (4,5-dihydroimidazol-5-yl)propyl(methyl)ethoxychlorosilane.

Specific examples of the compound having the modified portion (E) having a ketimine residual group include N-(1,3-dimethylbutylidene)-3-(diethoxy(methyl)silyl)-1-propaneamine, N-(1-methylethylidene)-3-(diethoxy(methyl)silyl)-1-propaneamine, N-ethylidene-3-(diethoxy(methyl)silyl)-1-propaneamine, N-(1-methylpropylidene)-3-(diethoxy(methyl)silyl)-1-propaneamine, N-(4-N,N-dimethylaminobenzylidene)-3-(diethoxy(methyl)silyl)-1-propaneamine and N-(cyclohexylidene)-3-(diethoxy(methyl)silyl)-1-propaneamine, and diethoxy(ethyl)silyl compounds, dipropoxy(methyl)silyl compounds and dipropoxy(ethyl)silyl compounds corresponding to these diethoxy(methyl)silyl compounds, and preferred examples among these include N-(1,3-dimethylbutylidene)-(diethoxy(methyl)silyl)-1-propaneamine and N-(1,3-dimethylbutylidene)-(dipropoxy(methyl)silyl)-1-propaneamine.

Examples of the compound also include N-(1,3-dimethylbutilidene)-3-(ethoxy(methyl)chlorosilyl)-1-propaneamine, N-(1-methylethylidene)-3-(ethoxy(methyl)chlorosilyl)-1-propaneamine, N-ethylidene-3-(ethoxy(methyl)chlorosilyl)-1-propaneamine, N-(1-methylpropylidene)-3-(ethoxy(methyl)chlorosilyl)-1-propaneamine, N-(4-N,N-dimethylaminobenzylidene)-3-(ethoxy(methyl)chlorosilyl)-1-propaneamine and N-(cyclohexylidene)-3-(ethoxy(methyl)chlorosilyl)-1-propaneamine, and ethoxy(ethyl)chlorosilyl compounds, propoxy(methyl)chlorosilyl compounds and proposy(ethyl)chlorosilyl compounds corresponding to these ethoxy(methyl)chlorosilyl compounds.

Specific examples of the compound having the modified portion (E) having an imidazole residual group or a dihydroimidazole residual group include 1-(3-(diethoxy(methyl)silyl)propyl)-imidazole, 1-(3-(diethoxy(ethyl)silyl)propyl)-imidazole, 1-(3-(dipropoxy(methyl)silyl)propyl)-imidazole, 1-(3-(dipropoxy(ethyl)silyl)propyl)-imidazole, 1-(3-(diethoxy(methyl)silyl)propyl)-4,5-dihydroimidazole, 1-(3-(diethoxy(ethyl)silyl)propyl)-4,5-dihydroimidazole, 1-(3-(dipropoxy(methyl)silyl)propyl)-4,5-dihydroimidazole and 1-(3-(dipropoxy(ethyl)silyl)propyl)-4,5-dihydroimidazole, and preferred examples among these include 1-(3-(diethoxy(methyl)silyl)propyl)-imidazole, 1-(3-(dipropoxy(methyl)silyl)propyl)-imidazole, 1-(3-(diethoxy(methyl)silyl)propyl)-4,5-dihydroimidazole and 1-(3-(dipropoxy(methyl)silyl)propyl)-4,5-dihydroimidazole.

Examples of the compound also include 1-(3-(ethoxy(methyl)chlorosilyl)propyl)-imidazole, 1-(3-(ethoxy(ethyl)chlorosilyl)propyl)-imidazole, 1-(3-(propoxy(methyl)chlorosilyl)propyl)-imidazole, 1-(3-(propoxy(ethyl)chlorosilyl)propyl)-imidazole, 1-(3-(ethoxy(methyl)chlorosilyl)propyl)-4,5-dihydroimidazole, 1-(3-(ethoxy(ethyl)chlorosilyl)propyl)-4,5-dihydroimidazole, 1-(3-(propoxy(methyl)chlorosilyl)propyl)-4,5-dihydroimidazole and 1-(3-(propoxy(ethyl)chlorosilyl)propyl)-4,5-dihydroimidazole.

Specific examples of the compound having the modified portion (E) having a pyridyl group or a nitrile group include a pyridine compound, such as 2-(2-(diethoxy(methyl)silyl)ethyl)-pyridine, 2-(2-(dipropoxy(methyl)silyl)ethyl)-pyridine, 2-(3-(diethoxy(methyl)silyl)propyl)-pyridine, 2-(3-(diethoxy(ethyl)silyl)propyl)-pyridine, 2-(3-(dipropoxy(methyl)silyl)propyl)-pyridine, 2-(3-(dipropoxy(ethyl)silyl)propyl)-pyridine, 4-(2-(diethoxy(methyl)silyl)ethyl)-pyridine, 4-(2-(dipropoxy(methyl)silyl)ethyl)-pyridine, 4-(3-(diethoxy(methyl)silyl)propyl)-pyridine, 4-(3-(diethoxy(ethyl)silyl)propyl)-pyridine, 4-(3-(dipropoxy(methyl)silyl)propyl)-pyridine and 4-(3-(dipropoxy(ethyl)silyl)propyl)-pyridine, and a cyano compound, such as 1-cyano-3-(diethoxy(methyl)silyl)-propane, 1-cyano-3-(diethoxy(ethyl)silyl)-propane, 1-cyano-3-(dipropoxy(methyl)silyl)-propane and 1-cyano-3-(dipropoxy(ethyl)silyl)-propane. Preferred examples among these include 2-(3-(diethoxy(methyl)silyl)propyl)-pyridine, 2-(3-(dipropoxy(methyl)silyl)propyl)-pyridine, 4-(3-(diethoxy(methyl)silyl)propyl)-pyridine, 4-(3-(dipropoxy(methyl)silyl)propyl)-pyridine, 1-cyano-3-(diethoxy(ethyl)silyl)-propane and 1-cyano-3-(dipropoxy(methyl)silyl)-propane.

Examples of the compound also include a pyridine compound, such as 2-(2-(ethoxy(methyl)chlorosilyl)ethyl)-pyridine, 2-(2-(propoxy(methyl)chlorosilyl)ethyl)-pyridine, 2-(3-(ethoxy(methyl)chlorosilyl)propyl)-pyridine, 2-(3-(ethoxy(ethyl)chlorosilyl)propyl)-pyridine, 2-(3-(propoxy(methyl)chlorosilyl)propyl)-pyridine, 2-(3-(propoxy(ethyl)chlorosilyl)propyl)-pyridine, 4-(2-(ethoxy(methyl)chlorosilyl)ethyl)-pyridine, 4-(2-(propoxy(methyl)chlorosilyl)ethyl)-pyridine, 4-(3-(ethoxy(methyl)chlorosilyl)propyl)-pyridine, 4-(3-(ethoxy(ethyl)chlorosilyl)propyl)-pyridine, 4-(3-(propoxy(methyl)chlorosilyl)propyl)-pyridine and 4-(3-(propoxy(ethyl)chlorosilyl)propyl)-pyridine, and a cyano compound, such as 1-cyano-3-(ethoxy(methyl)chlorosilyl)-propane, 1-cyano-3-(ethoxy(ethyl)chlorosilyl)-propane, 1-cyano-3-(propoxy(methyl)chlorosilyl)-propane and 1-cyano-3-(propoxy(ethyl)chlorosilyl)-propane.

Specific examples of the compound having the modified portion (E) having a (thio)isocyanate group or an oxazole residual group include an isocyanate compound, such as 1-isocyanato-3-(diethoxy(methyl)silyl)-propane, 1-isocyanato-3-(diethoxy(ethyl)silyl)-propane, 1-isocyanato-3-(dipropoxy(methyl)silyl)-propane and 1-isocyanato-3-(dipropoxy(ethyl)silyl)-propane, thioisocyanate compounds formed by replacing isocyanate in these isocyanate compounds by thioisocyanate, and an oxazole compound, such as 4-(3-(diethoxy(methyl)silyl)propyl)-oxazole, 4-(3-(diethoxy(ethyl)silyl)propyl)-oxazole, 4-(3-(dipropoxy(methyl)silyl)propyl)-oxazole and 4-(3-(dipropoxy(ethyl)silyl)propyl)-oxazole. Preferred examples among these include 1-isocyanato-3-(diethoxy(methyl)silyl)-propane, 1-isocyanato-3-(dipropoxy(methyl)silyl)-propane, 4-(3-(diethoxy(methyl)silyl)propyl)-oxazole and 4-(3-(dipropoxy(methyl)silyl)propyl)-oxazole.

In the present invention, the oxazole residual group includes an isoxazole residual group.

Examples of the compound also include an isocyanate compound, such as 1-isocyanato-3-(ethoxy(methyl)chlorosilyl)-propane, 1-isocyanato-3-(ethoxy(ethyl)chlorosilyl)-propane, 1-isocyanato-3-(propoxy(methyl)chlorosilyl)-propane and 1-isocyanato-3-(propoxy(ethyl)chlorosilyl)-propane, thioisocyanate compounds formed by replacing isocyanate in these isocyanate compounds by thioisocyanate, and an oxazole compound, such as 4-(3-(ethoxy(methyl)chlorosilyl)propyl)-oxazole, 4-(3-(ethoxy(ethyl)chlorosilyl)propyl)-oxazole, 4-(3-(propoxy(methyl)chlorosilyl)propyl)-oxazole and 4-(3-(propoxy(ethyl)chlorosilyl)propyl)-oxazole.

The modified polymer (F) may be obtained by copolymerizing a modified monomer compound having in the molecule thereof a polymerizable functional group and a functional group capable of forming the modified portion (E) capable of reacting with the surface of the filler, with a conjugated diene compound and/or an aromatic vinyl compound. Preferred examples of the modified monomer compound include a conjugated diene compound and an aromatic vinyl compound that each are substituted with a polymerizable functional group and a functional group capable of forming the modified portion (E) capable of reacting with the surface of the filler.

Examples of the modified portion (E) capable of reacting with the surface of the filler, which is used in the modified monomer, include a protected primary amino group, a protected secondary amino group, a tertiary amino group, an imino group, a ketimino group, an aldimino group, a pyridyl group, a nitrile group, an isocyanate group, a hydrazine group, an amidine group, an amidrazone group, a urea group and a thiourea group. Representative examples of the modified monomer compound include a protected 4-vinylaniline (primary amine) and a protected anilinostyrene (secondary amine).

Examples of the vinyl monomer having a pyridyl group include 2-vinylpyridine, 3-vinylpyridine, 4-vinylpyridine, 5-methyl-2-vinylpyridine and 5-ethyl-2-vinylpyridine, and 2-vinylpyridine and 4-vinylpyridine are particularly preferred.

Examples of the conjugated diene modified monomer include anilinophenylbutadiene, 1-anilinophenyl-1,3-butadiene, 1-anilinophenyl-3-methyl-1,3-butadiene, 1-anilinophenyl-3-chloro-1,3-butadiene, 3-anilinophenyl-2-methyl-1,3-bitadiene, 1-anilinophenyl-2-chloro-1,3-butadiene, 2-anilinophenyl-1,3-butadiene, 2-anilinophenyl-3-methyl-1,3-bitadiene and 2-anilinophenyl-3-chloro-1,3-bitadiene.

The conjugated diene compound that is copolymerized with the modified monomer is preferably 1,3-butadiene and/or isoprene, and the aromatic vinyl compound therefor is preferably styrene.

The amino group derived from the modifying agent of the modified conjugated diene polymer used in the present invention may be protected or may be deprotected to convert to a primary amine or a secondary amine, and all these cases are preferred. The following procedure may be used for the deprotecting treatment.

Specifically, the silyl protective group on the protected amino group is hydrolyzed to convert to a free amino group. The polymer is then subjected to removal of solvent to provide the dried polymer (B) having a primary amino group or a secondary amino group.

Modified Polymer (F)

The modified polymer (F) thus obtained preferably has a Mooney viscosity ($ML_{1+4}$, 100°C) of from 10 to 150, and more preferably from 15 to 100. When the Mooney viscosity is less than 10, sufficient rubber properties, such as breaking resistance, may not be obtained, and when it exceeds 150, the workability may be deteriorated, and it may be difficult to knead the polymer with other components.

The unvulcanized rubber composition of the present invention containing the modified polymer (F) preferably has a Mooney viscosity ($ML_{1+4}$, 130°C) of from 10 to 150, and more preferably from 30 to 100.

The modified polymer (F) used in the rubber composition of the present invention preferably has a ratio (Mw/Mn) of the weight average molecular weight (Mw) and the number average molecular weight (Mn), i.e., the molecular weight distribution (Mw/Mn), of from 1 to 3, and more preferably from 1.1 to 2.7.

When the molecular weight distribution (Mw/Mn) of the modified polymer (F) is in the range, the rubber composition may not be deteriorated in workability, may be easily kneaded, and may be sufficiently enhanced in properties thereof, on mixing the modified conjugated diene (co)polymer to form the rubber composition.

The modified polymer (F) used in the rubber composition of the present invention preferably has a number average molecular weight (Mn) of from 100,000 to 500,000, and more preferably from 150,000 to 300,000. When the number average molecular weight of the modified polymer (F) is in the range, reduction of the elastic modulus and increase of the hysteresis loss of the vulcanized product may be suppressed, thereby providing excellent breaking resistance, and the rubber composition containing the modified polymer (F) may have excellent kneading workability.

The modified polymer (F) used in the rubber composition of the present invention may be used solely or as a combination of two or more kinds thereof.

Additional Rubber Component (G)

An additional rubber component (G), which is a rubber component other than the polymer component (B) and the modified polymer (F), such as solution-polymerized diene synthetic rubber and natural rubber, may be added as a rubber component depending on necessity. Examples of the solution-polymerized diene synthetic rubber include polybutadiene rubber (BR), styrene-butadiene copolymer rubber (SBR) and polyisoprene rubber (IR). The solution-polymerized diene synthetic rubber may be generally used in the non-modified form, and modified diene rubber other than the modified polymer (F) may also be preferably used.

In the case where natural rubber is used as the additional rubber component (G), the organic acid contained in natural rubber may be included in the calculation of the organic acid contained in the entire mixed system. Natural rubber may be preferably used as the additional rubber component (G) unless the total amount of the organic acid deviates the range defined in the present invention.

Reinforcing Filler (C)

The rubber composition of the present invention preferably contains silica and/or carbon black as a reinforcing filler.

The silica is not particularly limited and may be selected arbitrarily from materials that have been ordinarily used as a reinforcing filler of rubber.

Examples of the silica include wet silica (water-containing silicate), dry silica (anhydrous silicate), calcium silicate and aluminum silicate, and wet silica is preferred among these since it may conspicuously attain both improvement of the breaking property and the wet grip performance.

The carbon black is also not particularly limited, examples of which include SRF, GPF, FEF, HAF, ISAF and SAF, and carbon black having an iodine adsorption amount (IA) of 60 mg/g or more and a dibutyl phthalate adsorption amount (DBP) of 80 mL/100 g or more is preferred.

The use of carbon black enhances the improvement of the grip performance and the breaking resistance, and HAF, ISAF and SAF, which are excellent in wear resistance, are particularly preferred.

The silica and/or carbon black may be used solely or as a combination of two or more kinds thereof.

The silica and/or carbon black may be necessarily added in an amount of from 10 to 150 parts by mass per 100 parts by mass of the rubber component, and more preferably from 25 to 100 parts by mass from the standpoint of the reinforcing property and the enhancement of various physical properties obtained thereby. When the amount of the silica and/or carbon black is in the range, the rubber composition may be excellent in the factory workability such as kneading workability and may have the intended wear resistance.

In the case where silica is used as the reinforcing filler in the rubber composition of the present invention, a silane coupling agent may be added for enhancing the reinforcing property and the low heat build-up property.

Examples of the silane coupling agent include bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzotiazolyl tetrasulfide, 3-triethoxysilylpropylbenzolyl tetrasulfide, 3-triethoxysilylpropyl methacrylate monosulfide, 3-trimethoxysilylpropyl methacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl tetrasulfide and dimethoxymethylsilylpropylbenzothiazolyl tetrasulfide, and among these, bis(3-triethoxysilylpropyl) polysulfide and 3-trimethoxysilylpropylbenzotiazolyl tetrasulfide are preferred from the standpoint of the enhancement of the reinforcing property.

The silane coupling agent may be used solely or as a combination of two or more kinds thereof.

The amount of the silane coupling agent mixed in the rubber composition of the present invention is preferably from (1/100) to (20/100) in terms of the mass ratio ((silane coupling agent) / (silica)). When the amount is (1/100) or more, the effect of enhancing the low heat build-up property of the rubber composition may be favorably exhibited, and when the amount is (20/100) or less, the cost of the rubber composition may be lowered and economical efficiency may be enhanced. The mass ratio is more preferably from (3/100) to (20/100), and particularly preferably from (4/100) to (10/100).

Organic Acid (D) used on mixing

As the organic acid (D) used on mixing, a higher fatty acid compound is generally used in the rubber industry, and stearic acid used as a vulcanization accelerating aid is particularly preferred.

The vulcanization accelerating aid may be used in the form of a combination of a metal oxide (mainly zinc flower) and a fatty acid (mainly stearic acid) in a sulfur vulcanization system, and may be used for activating the vulcanization accelerator and enhancing the vulcanization (crosslinking) efficiency.

The residue of an organic acid (A) added as an emulsifier in the production process of the polymer, as the component (A), is preferably a fatty acid compound, a resin acid (rosin acid) compound or a carbolic acid compound.

Examples of the fatty acid compound include a fatty acid soap, such as capric acid, lauric acid, myristic acid, palmitic acid, stearic acid and oleic acid, and examples of the resin acid (rosin acid) compound include a compound containing an organic acid, such as abietic acid, neoabietic acid, palustric acid, pimaric acid, isopimaric acid and dehydroabietic acid. The resin acids among these are natural resin acids contained in tall rosin, gum rosin or wood rosin, and a rosinate soap solely or a mixed soap of a rosin acid and a fatty acid may be mainly used for the emulsifier used in the synthesis of E-SBR. Examples of the carbolic acid compound include a phenol resin.

However, for attaining the objects of the present invention (i.e., the enhancement of the low heat build-up property and the wear resistance), the amount of the residue of an organic acid (A) contained in the E-SBR is preferably as small as possible.

The residue of an organic acid (A) added in the production process of the polymer, which is the component (B), is used as an emulsifier, and a metal salt of a higher fatty acid compound having 12 or more carbon atoms, a metal salt of a resin acid compound (a metal salt of a rosin acid compound), and a metal salt of a carbolic acid may be used. The metal constituting the metal salt may be an alkali metal or an alkaline earth metal. In particular, a heterogeneous rosinate soap may be used as an emulsifier for synthetic rubber, and an alkali metal salt, such as a sodium salt and a potassium salt, may be used.

The rubber composition of the present invention may be sulfur-crosslinkable, and sulfur, a vulcanization accelerator and a vulcanization accelerating aid may be mixed therein as a vulcanization system. Among these, the vulcanization accelerating aid activates the vulcanization accelerator to enhance the acceleration effect. Examples thereof include a metal oxide, represented by zinc oxide (zinc flower), and a fatty acid, represented by stearic acid, which may be always added to diene rubber.

In the present invention, stearic acid may be used as a representative example of the organic acid (D) used on mixing.

Preparation and Purpose of Rubber Composition

The rubber composition of the present invention may contain depending on necessity various additives that are ordinarily used in the rubber industry, such as sulfur, a vulcanization accelerator, a softening agent, a process oil, an antiaging agent, an antiscorching agent, zinc flower, an antiblocking agent, a foaming agent, a foaming aid and a resin, in such a range that does not impair the advantageous effects of the present invention.

The rubber composition of the present invention may be obtained by kneading with an open kneader, such as rolls, or a closed kneader, such as a Banbury mixer, and may be vulcanized after molding, thereby applying to various rubber products. The rubber composition may be applied to tire members, such as a tire tread, an under tread, a carcass, a sidewall, a side reinforcing rubber member and a bead filler, and is particularly preferably applied to tread rubber for a fuel efficient tire, a large-sized tire and a high performance tire that are excellent in the low heat build-up property, the wear resistance and the breaking strength.

Tire

The tire of the present invention contains the sulfur-crosslinkable rubber composition of the present invention as a tire member. Preferred examples of the tire member include a tread member, a base tread member, a sidewall member, a side reinforcing rubber member and a bead filler. The sulfur-crosslinkable rubber composition of the present invention may be used in any of these members, and is particularly preferably used in a tread member.

A tire that contains the sulfur-crosslinkable rubber composition of the present invention in the tread has a low rolling resistance providing excellent low fuel consumption property, and is excellent in the breaking property and the wear resistance. Examples of a gas to be filled in the tire of the present invention include the ordinary air or the air having been controlled in oxygen partial pressure, and an inert gas, such as nitrogen. In the case where the rubber composition of the present invention is used as a tread, the rubber composition may be extruded into a tread member, which may be adhered on a tire molding machine by an ordinary method, thereby providing a green tire. The green tire may be applied with heat and pressure in a vulcanizing machine, thereby providing a tire.

Embodiments of the production process of the present invention will be described in detail below.

The first production process of the present invention is a process of producing a rubber composition containing a rubber component (R) containing emulsion-polymerized styrene-butadiene copolymer rubber containing from 0 to 3.5 parts by mass of an organic acid per 100 parts by mass of the emulsion-polymerized styrene-butadiene copolymer rubber, a filler containing an inorganic filler (T), a silane coupling agent (U), and at least one vulcanization accelerator (V) selected from a guanidine compound, a sulfenamide compound and a thiazole compound. The process contains plural steps of kneading the rubber composition, in which the rubber component (R), the whole or a part of the inorganic filler (T), the whole or a part of the silane coupling agent (U) and the vulcanization accelerator (V) are added and kneaded in a first step (X) of kneading.

In the process of the present invention, the vulcanization accelerator (V) is added and kneaded in the first step of kneading for enhancing the activity of the coupling function of the silane coupling agent (U), and the amount of the organic acid in the emulsion-polymerized styrene-butadiene copolymer rubber (which is hereinafter abbreviated as emulsion-polymerized SBR) is limited to from 0 to 3.5 parts by mass per 100 parts by mass of the copolymer rubber, whereby the use of emulsion-polymerized SBR having a small organic acid amount decreases the organic acid amount on kneading, and large enhancement of the low heat build-up property is obtained with a formulation containing emulsion-polymerized SBR.

For decreasing the organic acid amount in the first step (X) of kneading, an organic acid that is not derived from the emulsion-polymerized styrene-butadiene copolymer rubber in the rubber composition is preferably added in the second or later step of kneading.

The molar amount X of the organic acid in the rubber composition in the first step of kneading preferably has the relationship with respect to the molar amount Y of the vulcanization accelerator (V) shown by the expression (G) below, and thereby the reduction of the enhancement of the activity of the coupling function due to the vulcanization accelerator (V) mixed may be favorably suppressed.

$$0 \leq X \leq 1.5 \times Y \qquad (G)$$

In the first production process of the present invention, it is preferred in the first step of kneading that the rubber component (R), the whole or a part of the inorganic filler (T) and the whole or a part of the silane coupling agent (U) are kneaded, and then the vulcanization accelerator (V) is added thereto and further kneaded, for further favorably suppressing the reduction of the enhancement of the activity of the coupling function due to the vulcanization accelerator (V) mixed. Specifically, after sufficiently performing the reaction between the inorganic filler (T) and the silane coupling agent (U), the reaction between the silane coupling agent (U) and the rubber component (R) may be performed.

It is more preferred in the first step of kneading that the period of time from the addition of the rubber component (R), the whole or a part of the inorganic filler (T) and the whole or a part of the silane coupling agent (U) to the addition of the vulcanization accelerator (V) in the course of the first step is preferably 10 to 180 seconds. The lower limit of the period is more preferably 30 seconds or more, and the upper limit thereof is more preferably 150 seconds or less, and particularly preferably 120 seconds or less. When the period of time is 10 seconds or more, the reaction between the component (B) and the component (C) may be performed sufficiently. When the period of time exceeds 180 seconds, no further effect may be expected since the reaction between the component (B) and the component (C) have sufficiently proceeded, and the upper limit of the period is preferably 180 seconds.

The second production process of the present invention is a process of producing a rubber composition containing a rubber component (R) containing emulsion-polymerized styrene-butadiene copolymer rubber containing from 0 to 3.5 parts by mass of an organic acid per 100 parts by mass of the emulsion-polymerized styrene-butadiene copolymer

rubber, a filler containing an inorganic filler (T), a silane coupling agent (U), and at least one vulcanization accelerator (V) selected from a guanidine compound, a sulfenamide compound and a thiazole compound. The process contains three or more steps of kneading the rubber composition, in which the rubber component (R), the whole or a part of the inorganic filler (T) and the whole or a part of the silane coupling agent (U) are added and kneaded in a first step (X) of kneading, the vulcanization accelerator (V) is added and kneaded in a step (Y) that is a second or later step before the final step, and a vulcanizing agent is added and kneaded in the final step (Z).

In the second production process of the present invention, the components are kneaded in three or more steps of kneading for suppressing the reduction of the molecular weight of the rubber component (R) due to high temperature kneading for a prolonged period of time. If the kneading time per one step is prolonged for reducing the number of steps of kneading, the rubber component (R) may be exposed to a high temperature for a long period of time, which brings about decrease of the molecular weight of the rubber component (R), and it is thus important to avoid the phenomenon.

Furthermore, the rubber component (R), the whole or a part of the inorganic filler (T) and the whole or a part of the silane coupling agent (U) are kneaded in the first step (X) of kneading, for sufficiently performing the reaction between the inorganic filler (T) and the silane coupling agent (U).

In the second production process of the present invention, the vulcanization accelerator (V) is added and kneaded in a step (Y) that is a second or later step before the final step, whereby after sufficiently performing the reaction between the inorganic filler (T) and the silane coupling agent (U), the activity of the coupling function of the silane coupling agent (U) is enhanced with the vulcanization accelerator (V), and thereby the reaction between the silane coupling agent (U) and the rubber component (R) may be favorably performed.

In the second production process of the present invention, the amount of the organic acid in the emulsion-polymerized SBR is limited to from 0 to 3.5 parts by mass per 100 parts by mass of the copolymer rubber due to the same reasons as in the first production process of the present invention.

Preferred embodiments that are common to the first production process of the present invention and the second production process of the present invention will be described in detail below.

In the process of the present invention, the maximum temperature of the rubber composition in the first step of kneading is preferably from 120 to 190°C for sufficiently performing the reaction between the inorganic filler (T) and the silane coupling agent (U). In this point of view, the maximum temperature of the rubber composition in the first step of kneading is more preferably from 130 to 190°C, and further preferably from 140 to 180°C.

The kneading steps of the rubber composition in the process of the present invention contains at least two steps, i.e., the first step of kneading that does not include a vulcanizing agent and the like other than the vulcanization accelerator (V), and the second step of kneading that includes the vulcanizing agent and the like, and depending on necessity, may further contain an intermediate step that does not include a vulcanizing agent and the like other than the vulcanization accelerator (V). The vulcanizing agent and the like referred to herein means a vulcanizing agent and a vulcanization accelerator.

In the process of the present invention, in the case where the kneading steps contain two steps, i.e., the first step (X) and the final step (Z), it is preferred that the vulcanizing agent is added and kneaded in the final step (Z), and it is more preferred that the vulcanizing agent and an organic acid that is not derived from the emulsion-polymerized SBR are added and kneaded in the final step (Z).

The first step of kneading referred to in the present invention means the first step of kneading the rubber component (R), the inorganic filler (T) and the silane coupling agent (U), but does not include steps of the case where the rubber component (R) is kneaded with a filler other than the inorganic filler (T) in the initial stage and the case where only the rubber component (R) is preliminarily kneaded.

Silane Coupling Agent (U)

The silane coupling agent (U) used in the production process of a rubber composition of the present invention is preferably at least one compound selected from compounds represented by the following general formulae (I) and (II).

The rubber composition according to the process of the present invention contains the silane coupling agent (U), and thereby the rubber composition is excellent in workability on processing the rubber and provides a tire having better wear resistance.

The general formulae (I) and (II) will be described below.

$$(R^1O)_{3-p}(R^2)_pSi\text{-}R^3\text{-}S_a\text{-}R^3\text{-}Si(OR^1)_{3-r}(R^2)_r \ldots \qquad (I)$$

wherein $R^1$ may be the same as or different from each other and each represent a linear, cyclic or branched alkyl group having from 1 to 8 carbon atoms or a linear or branched alkoxyalkyl group having from 2 to 8 carbon atoms; $R^2$ may be the same as or different from each other and each represent a linear, cyclic or branched alkyl group having from 1 to 8 carbon atoms; $R^3$ may be the same as or different from each other and each represent a linear or branched alkylene

group having from 1 to 8 carbon atoms; a represents a number of from 2 to 6 in terms of average value; and p and r may be the same as or different from each other and each represent a number of from 0 to 3 in terms of average value, provided that both p and r are not 3 simultaneously.

Specific examples of the silane coupling agent (U) represented by the general formula (I) include bis(3-triethoxysilylpropyl) tetrasulfide, bis(3-trimethoxysilylpropyl) tetrasulfide, bis(3-methyldimethoxysilylpropyl) tetrasulfide, bis (2-triethoxysilylethyl) tetrasulfide, bis(3-triethoxysilylpropyl) disulfide, bis(3-trimethoxysilylpropyl) disulfide, bis(3-methyldimethoxysilylpropyl) disulfide, bis(2-triethoxysilylethyl) disulfide, bis(3-triethoxysilylpropyl) trisulfide, bis(3-trimethoxysilylpropyl) trisulfide, bis(3-methyldimethoxysilylpropyl) trisulfide, bis(2-triethoxysilylethyl) trisulfide, bis(3-monoethoxydimethylsilylpropyl) tetrasulfide, bis(3-monoethoxydimethylsilylpropyl) trisulfide, bis(3-monoethoxydimethylsilylpropyl) disulfide, bis(3-monomethoxydimethylsilylpropyl) tetrasulfide, bis(3-monomethoxydimethylsilylpropyl) trisulfide, bis(3-monomethoxydimethylsilylpropyl) disulfide, bis(2-monoethoxydimethylsilylethyl) tetrasulfide, bis(2-monoethoxydimethylsilylethyl) trisulfide and bis (2-monoethoxydimethylsilylethyl) disulfide.

$$\mathbf{(R^4O)_{3-s}(R^5)_sSi\text{-}R^6\text{-}S_k\text{-}R^7\text{-}S_k\text{-}R6\text{-}Si(OR^4)_{3-t}(R^5)_t} \ldots \qquad \textbf{(II)}$$

wherein $R^4$ may be the same as or different from each other and each represent a linear, cyclic or branched alkyl group having from 1 to 8 carbon atoms or a linear or branched alkoxyalkyl group having from 2 to 8 carbon atoms; $R^5$ may be the same as or different from each other and each represent a linear, cyclic or branched alkyl group having from 1 to 8 carbon atoms; $R^6$ may be the same as or different from each other and each represent a linear or branched alkylene group having from 1 to 8 carbon atoms; $R^7$ represents a divalent group selected from ($-S-R^8-S-$), ($-R^9-S_{m1}-R^{10}-$) and ($-R^{11}-S_{m2}-R^{12}-S_{m3}-R^{13}-$) (wherein $R^8$ to $R^{13}$ may be the same as or different from each other and each represent a divalent hydrocarbon group having from 1 to 20 carbon atoms, a divalent aromatic group or a divalent organic group containing a hetero element other than sulfur and oxygen; and m1, m2 and m3 may be the same as or different from each other and each represent a number of 1 or more and less than 4 in terms of average value); k may be the same as or different from each other and each represent a number of from 1 to 6 in terms of average value; and s and t may be the same as or different from each other and each represent a number of from 0 to 3 in terms of average value, provided that both s and t are not 3 simultaneously.

Specific preferred examples of the silane coupling agent (U) represented by the general formula (II) include compounds represented by average compositional formula

$$(CH_3CH_2O)\ _3Si\text{-}\ (CH_2)_3\text{-}S_2\text{-}(CH_2)_6\text{-}S_2\text{-}(CH_2)_3\text{-}Si(OCH_2CH_3)_3,$$

average compositional formula

$$(CH_3CH_2O)_3Si\text{-}(CH_2)_3\text{-}S_2\text{-}(CH_2)_{10}\text{-}S_2\text{-}(CH_2)_3\text{-}Si(OCH_2CH_3)_3,$$

average compositional formula

$$(CH_3CH_2O)_3Si\text{-}(CH_2)_3\text{-}S_3\text{-}(CH_2)_6\text{-}S_3\text{-}(CH_2)_3\text{-}Si(OCH_2CH_3)_3,$$

average compositional formula

$$(CH_3CH_2O)_3Si\text{-}(CH_2)_3\text{-}S_4\text{-}(CH_2)_6\text{-}S_4\text{-}(CH_2)_3\text{-}Si(OCH_2CH_3)_3,$$

average compositional formula

$$(CH_3CH_2O)_3Si\text{-}(CH_2)_3\text{-}S\text{-}(CH_2)_6\text{-}S_2\text{-}(CH_2)_6\text{-}S\text{-}(CH_2)_3\text{-}Si(OCH_2CH_3)_3,$$

average compositional formula

$$(CH_3CH_2O)\ _3Si\text{-}(CH_2)_3\text{-}S\text{-}(CH_2)_6\text{-}S_{2.5}\text{-}(CH_2)_6\text{-}S\text{-}(CH_2)_3\text{-}Si(OCH_2CH_3)_3,$$

average compositional formula

$$(CH_3CH_2O)_3Si\text{-}(CH_2)_3\text{-}S\text{-}(CH_2)_6\text{-}S_3\text{-}(CH_2)_6\text{-}S\text{-}(CH_2)_3\text{-}Si(OCH_2CH_3)_3,$$

average compositional formula

$$(CH_3CH_2O)_3Si\text{-}(CH_2)_3\text{-}S\text{-}(CH_2)_6\text{-}S_4\text{-}(CH_2)_6\text{-}S\text{-}(CH_2)_3\text{-}Si(OCH_2CH_3)_3,$$

average compositional formula

$$(CH_3CH_2O)_3Si\text{-}(CH_2)_3\text{-}S\text{-}(CH_2)_{10}\text{-}S_2\text{-}(CH_2)_{10}\text{-}S\text{-}(CH_2)_3\text{-}Si(OCH_2CH_3)_3,$$

average compositional formula

$$(CH_3CH_2O)_3Si\text{-}(CH_2)_3\text{-}S_4\text{-}(CH_2)_6\text{-}S_4\text{-}(CH_2)_6\text{-}S_4\text{-}(CH_2)_3\text{-}Si(OCH_2CH_3)_3,$$

average compositional formula

$$(CH_3CH_2O)_3Si\text{-}(CH_2)_3\text{-}S_2\text{-}(CH_2)_6\text{-}S_2\text{-}(CH_2)_6\text{-}S_2\text{-}(CH_2)_3\text{-}Si(OCH_2CH_3)_3,$$

and
average compositional formula

$$(CH_3CH_2O)_3Si\text{-}(CH_2)_3\text{-}S\text{-}(CH_2)_6\text{-}S_2\text{-}(CH_2)_6\text{-}S_2\text{-}(CH_2)_6\text{-}S\text{-}(CH_2)_3\text{-}Si(OCH_2CH_3)_3.$$

The silane coupling agent (U) represented by the general formula (II) may be produced, for example, by the method disclosed in JP-A-2006-167919.

The silane coupling agent (U) in the process of the present invention is particularly preferably the compound represented by the general formula (I) among the compounds represented by the general formulae (I) and (II) since the vulcanization accelerator (V) is liable to cause activation of the polysulfide-bonded portion, which reacts with the rubber component (R).

In the process of the present invention, the silane coupling agent (U) may be used solely or as a combination of two or more kinds thereof.

The amount of the silane coupling agent mixed in the rubber composition in the process of the present invention is preferably from 1 to 20% by mass based on the inorganic filler. When the amount is less than 1% by mass, the effect of enhancing the low heat build-up property of the rubber composition may not be exhibited, and when it exceeds 20% by mass, the cost of the rubber composition may be too high, which may deteriorates the economical efficiency. The amount thereof is more preferably from 3 to 20% by mass based on the inorganic filler, and particularly preferably from 4 to 10% by mass based on the inorganic filler.

Vulcanization Accelerator (V)

Examples of the vulcanization accelerator (V) used in the production process of a rubber composition of the present invention include a guanidine compound, a sulfenamide compound and a thiazole compound.

Examples of the guanidine compound include 1,3-diphenylguanidine, 1,3-di-o-tolylguanidine, 1-o-tolylbiguanide, di-o-tolylguanidine salt of dicatechol borate, 1,3-di-o-cumenylguanidine, 1,3-di-o-biphenylguanidine and 1,3-di-o-cumenyl-2-propyonylguanidine. Among these, 1,3-diphenylguanidine, 1,3-di-o-tolylguanidine and 1-o-tolylbiguanide are preferred due to the high reactivity thereof, and 1,3-diphenylguanidine is particularly preferred due to the higher reactivity thereof.

Examples of the sulfenamide compound include N-cyclohexyl-2-benzothiazolyl sulfenamide, N,N-dicyclohexyl-2-benzothiazolyl sulfenamide, N-tert-butyl-2-benzothiazolyl sulfenamide, N-oxydiethylene-2-benzothiazolyl sulfenamide, N-methyl-2-benzothiazolyl sulfenamide, N-ethyl-2-benzothiazolyl sulfenamide, N-propyl-2-benzothiazolyl sulfenamide, N-butyl-2-benzothiazolyl sulfenamide, N-pentyl-2-benzothiazolyl sulfenamide, N-hexyl-2-benzothiazolyl sulfenamide, N-pentyl-2-benzothiazolyl sulfenamide, N-octyl-2-benzothiazolyl sulfenamide, N-2-ethylhexyl-2-benzothiazolyl sulfenamide, N-decyl-2-benzothiazolyl sulfenamide, N-dodecyl-2-benzothiazolyl sulfenamide, N-stearyl-2-benzothiazolyl sulfenamide, N,N-dimethyl-2-benzothiazolyl sulfenamide, N,N-diethyl-2-benzothiazolyl sulfenamide, N,N-dipropyl-2-benzothiazolyl sulfenamide, N,N-dibutyl-2-benzothiazolyl sulfenamide, N,N-dipentyl-2-benzothiazolyl sulfenamide, N,N-dihexyl-2-benzothiazolyl sulfenamide, N,N-dipentyl-2-benzothiazolyl sulfenamide, N,N-dioctyl-2-benzothiazolyl sulfenamide, N,N-di-2-ethylhexylbenzothiazolyl sulfenamide, N-decyl-2-benzothiazolyl sulfenamide, N,N-didodecyl-2-benzothiazolyl sulfenamide and N,N-distearyl-2-benzothiazolyl sulfenamide. Among these, N-cyclohexyl-2-benzothiazolyl sulfenamide and N-tert-butyl-2-benzothiazolyl sulfenamide are preferred due to the high reactivity thereof.

Examples of the thiazole compound include 2-mercaptobenzothiazole, di-2-benzothiazolyl disulfide, zinc salt of 2-mercaptobenzothiazole, cyclohexylamine salt of 2-mercaptobenzothiazole, 2-(N,N-diethylthiocarbamoylthio)benzothiazole, 2-(4'-morpholinodithio)benzothiazole, 4-methyl-2-mercaptobenzothiazole, di(4-methyl-2-benzothiazolyl) disulfide, 5-chloro-2-mercaptobenzothiazole, 2-mercaptobenzothiazole sodium salt, 2-mercapto-6-nitrobenzothiazole, 2-mercapto-naphtho[1,2-d]thiazole, 2-mercapto-5-methoxybenzothiazole and 6-amino-2-mercaptobenzothiazole. Among these, 2-mercaptobenzothiazole and di-2-benzothiazolyl disulfide are preferred due to the high reactivity thereof.

In the first production process of the present invention, the molar amount of the vulcanization accelerator (V) in the rubber composition in the first step of kneading is preferably from 0.1 to 1.0 time the molar amount of the silane coupling agent (U). When the amount is 0.1 time or more, the silane coupling agent (U) may be sufficiently activated, and when the amount is 1.0 time or less, it does not largely affect the vulcanization rate. It is more preferred that the number of molecules (molar number) of the vulcanization accelerator (V) is from 0.3 to 1.0 time the number of molecules (molar number) of the silane coupling agent (U).

The vulcanization accelerator (V) is used also as an accelerator for sulfur vulcanization, and thus may be mixed in an appropriate amount in the final step of kneading depending on necessity.

Organic Acid

Examples of the organic acid in the process of the present invention include a saturated fatty acid and an unsaturated fatty acid, such as stearic acid, palmitic acid, myristic acid, lauric acid, arachidic acid, behenic acid, lignoceric acid, capric acid, pelargonic acid, caprylic acid, enanthic acid, caproic acid, oleic acid, vaccenic acid, linoleic acid, linolenic acid and nervonic acid, and a resin acid, such as rosin acid and modified rosin acid.

In the process of the present invention, 50% by mol or more of the organic acid is preferably stearic acid for sufficiently exhibiting the function of the vulcanization accelerator.

50% by mol or more of the organic acid may be rosin acid (including modified rosin acid) and/or a fatty acid contained in the emulsion-polymerized styrene-butadiene copolymer.

In the process of the present invention, the amount of the organic acid in the emulsion-polymerized SBR is preferably from 1 to 3 parts by mass in terms of the organic acid per 100 parts by mass of the copolymer rubber for further decreasing the amount of the organic acid in the rubber composition.

Rubber Component (R)

The rubber component (R) used in the production method of a rubber composition of the present invention may contain solely the emulsion-polymerized SBR (which may be plural kinds of the emulsion-polymerized SBR), or may contain natural rubber and/or another synthetic diene rubber, in addition to the emulsion-polymerized SBR.

The synthetic diene rubber used herein may be solution-polymerized styrene-butadiene copolymer rubber (which may be hereinafter referred to as solution-polymerized SBR), polybutadiene rubber (BR), polyisoprene rubber (IR), butyl rubber (IIR) and ethylene-propylene-diene terpolymer rubber (EPDM), and the natural rubber and the synthetic diene rubber each may be used solely or as a mixture of two or more kinds thereof.

For the enhancement of the low heat build-up property of the rubber composition, a modified conjugated diene polymer containing at least one of a tin atom, a nitrogen atom, a sulfur atom, an oxygen atom and a titanium atom in any of the polymerization active terminal, the polymerization initiation terminal and the polymer chain is preferably contained in an amount of from 5 to 90% by mass of the rubber component (R), as compared to the non-modified conjugated diene polymer. Preferred examples of the modified conjugated diene polymer include modified solution-polymerized SBR and modified BR.

The inorganic filler (T) used in the production process of a rubber composition of the present invention may be silica or an inorganic compound represented by the following general formula (III):

$$dM^1 \cdot xSiOy.zH_2O \qquad (III)$$

In the general formula (III), $M^1$ represents at least one selected from a metal selected from aluminum, magnesium, titanium, calcium and zirconium, and oxides and hydroxides of the metals, and hydrates thereof, and carbonate salts of the metals; and d, x, y and z represent an integer of from 1 to 5, an integer of from 0 to 10, an integer of from 2 to 5 and an integer of from 0 to 10, respectively.

In the general formula (III), in the case where both x and z are 0, the inorganic compound is at least one of metal selected from aluminum, magnesium, titanium, calcium and zirconium, and metal oxides and metal hydroxides.

In the process of the present invention, among the inorganic fillers (T), silica is preferred from the standpoint of both the low rolling resistance property and the wear resistance attained. Any commercially available products may be used as the silica, and among these, wet silica, dry silica and colloidal silica are preferably used, and wet silica is particularly preferably used. The silica preferably has a BET specific surface area of from 40 to 350 $m^2/g$ (measured according to ISO 5794/1). The silica that has a BET surface area in the range has an advantage that both the rubber reinforcement and the dispersibility in the rubber component (R) may be attained. In this point of view, the silica that has

a BET surface area of from 80 to 350 $m^2/g$ is more preferred and the silica that has a BET surface area of from 120 to 350 $m^2/g$ is particularly preferred. Examples of the silica used include commercially available products, for example, "Nipsil AQ", a trade name (BET specific surface area: 220 $m^2/g$) and "Nipsil KQ", both produced by Tosoh Silica Corporation, and "Ultrasil VN3", a trade name (BET specific surface area: 175 $m^2/g$), produced by Degussa AG.

Examples of the inorganic compound represented by the general formula (III) include alumina ($AL_2O_3$), such as $\gamma$-alumina and $\alpha$-alumina, alumina monohydrate ($Al_2O_3$-$H_2O$), such as boehmite and diaspore, aluminum hydroxide ($Al(OH)_3$), such as gibbsite and bayerite, aluminum carbonate ($Al_2(CO_3)_2$), magnesium hydroxide ($Mg(OH)_2$), magnesium oxide (MgO), magnesium carbonate ($MgCO_3$), talc ($3MgO{\cdot}4SiO_2{\cdot}H_2O$), attapulgite ($5MgO{\cdot}8SiO_2{\cdot}9H_2O$), titanium white ($TiO_2$), titanium black ($TiO_{2n-1}$), calcium oxide (CaO), calcium hydroxide ($Ca(OH)_2$), aluminum magnesium oxide ($MgO{\cdot}Al_2O_3$), clay ($Al_2O_3{\cdot}2SiO_2$), kaolin ($Al_2O_3{\cdot}2SiO_2{\cdot}2H_2O$), pyrophyllite ($Al_2O_3{\cdot}4SiO_2{\cdot}H_2O$), bentonite ($Al_2O_3{\cdot}4SiO_2{\cdot}2H_2O$), aluminum silicate (such as $Al_2SiO_5$ and $Al_4{\cdot}3SiO_4{\cdot}5H_2O$), magnesium silicate (such as $Mg_2SiO_4$ and $MgSiO_3$), calcium silicate (such as $Ca_2.SiO_4$), aluminum calcium silicate (such as $Al_2O_3{\cdot}CaO{\cdot}2SiO_2$), magnesium calcium silicate ($CaMgSiO_4$), calcium carbonate ($CaCO_3$), zirconium oxide ($ZrO_2$), zirconium hydroxide ($ZrO(OH)_2{\cdot}nH_2O$), zirconium carbonate ($Zr(CO_3)_2$) and a crystalline aluminosilicate salt containing hydrogen, an alkali metal or an alkaline earth metal that compensates the charge, such as various kinds of zeolite. $M^1$ in the general formula (III) is preferably at least one selected from an aluminum metal, oxides and hydroxides of aluminum, hydrates thereof and carbonate salts of aluminum.

The inorganic compound represented by the general formula (III) may be used solely or as a mixture of two or more kinds thereof. The inorganic compound preferably has an average particle diameter in a range of from 0.01 to 10 $\mu$m, and more preferably in a range of from 0.05 to 5 $\mu$m, from the standpoint of the balance among the kneading workability, the wear resistance and the wet grip performance.

The inorganic filler (T) used in the process of the present invention may be silica solely or a combination of silica and at least one of the inorganic compound represented by the general formula (III).

The filler of the rubber composition in the process of the present invention may contain carbon black depending on necessity in addition to the inorganic filler (T). The use of carbon black contained decreases the electric resistance and provides an effect of suppressing static charge. The carbon black is not particularly limited, examples thereof include carbon black of the grades SAF, ISAF, IISAF, N339, HAF, FEF, GPF and SRF, with high, medium or low structure, and preferred examples among these include carbon black of the grades SAF, ISAF, IISAF, N339, HAF and FEF. The carbon black preferably has a nitrogen adsorption specific surface area of from 30 to 250 $m^2/g$ ($N_2SA$, measured according to JIS K6217-2 (2001)). The carbon black may be used solely or as a combination of two or more kinds thereof. In the process of the present invention, the carbon black is not included in the inorganic filler (T).

The inorganic filler (T) of the rubber composition in the process of the present invention is preferably used in an amount of from 20 to 120 parts by mass per 100 parts by mass of the rubber component (R). The amount is preferably 20 parts by mass or more for ensuring the wet performance, and the amount is preferably 120 parts by mass or less for enhancing the low heat build-up property. The amount is more preferably from 30 to 100 parts by mass.

The filler of the rubber composition in the process of the present invention is preferably used in an amount of from 20 to 150 parts by mass per 100 parts by mass of the rubber component (R). The amount is preferably 20 parts by mass or more for enhancing the reinforcing property of the rubber composition, and the amount is preferably 150 parts by mass or less for enhancing the low heat build-up property.

The amount of the inorganic filler (T) in the filler is preferably 40% by mass or more for attaining both the wet performance and the low heat build-up property, and is more preferably 70% by mass or more.

In the production process of a rubber composition of the present invention, in general, the various additives including a vulcanization activator, such as zinc flower, and an antiaging agent to be mixed in the rubber composition may be kneaded depending on necessity in the first step or the final step of kneading or in an intermediate step between the first step and the final step.

Examples of a kneading equipment used in the production process of the present invention include a Banbury mixer, rolls and an intensive mixer.

## Example

The present invention will be described in more detail with reference to examples below, but the present invention is not limited to the examples.

The loss tangent ($\tan\delta$) and the wear resistance of the rubber composition after vulcanization, the amount of the organic acid remaining in the E-SBR, and the microscopic structure (i.e., the bonded vinyl content and the bonded styrene content) of the modified styrene-butadiene copolymer rubber (modified SBR) were measured and evaluated in the following manners.

(1) Loss Tangent (tanδ)

For Examples 1 to 47 and Comparative Examples 1 to 5, the rubber composition was measured with a dynamic spectrometer, produced by Rheometrics, Inc., U.S., under conditions of a dynamic strain of 1%, a frequency of 10 Hz and a temperature of 50°C, and the tanδ was expressed in terms of index with the inverse of the tanδ of the control (Comparative Examples 1, 2, 3, 4 and 5 and Example 22) being 100. A larger index number means lower heat build-up property.

For Examples 48 to 65 and Comparative Examples 6 to 14, the rubber composition was measured for the tanδ with a viscoelasticity measuring equipment (produced by Rheometrics, Inc.) at a temperature of 60°C, a dynamic strain of 5% and a frequency of 15 Hz, and the tanδ was expressed in terms of index according to the following expression with the inverse of the tanδ of Comparative Example 6 being 100. A larger index number means lower heat build-up property and a smaller hysteresis loss.

low heat build-up property index = ((tanδ of vulcanized rubber composition of Comparative Example 6) / (tanδ of vulcanized rubber composition to be tested)) × 100

(2) Wear Resistance

The rubber composition was measured for the wear amount at a slip ratio of 25% at room temperature (23°C) with a Lambourn abrasion tester, and the wear resistance was expressed in terms of index with the inverse of the wear amount of the control being 100. A larger index number means better wear resistance.

(3) Measurement of Amount of Organic Acid in Emulsion-polymerized SBR (E-SBR)

The amount of the organic acid was measured according to JIS K6237 (2001). The SBR #1500 with no oil added used in the examples contained 6.39 parts by mass of an organic acid.

(4) Bonded Vinyl Content of Conjugated Diene Portion of Modified SBR (in terms of % based on the total diene portion)

The bonded vinyl content was measured by 270 MHz $^1$H-NMR. The measurement results are shown in Table 7.

(5) Bonded Styrene Content in Modified SBR (in terms of % by mass in the polymer)

The bonded styrene content was measured by 270 MHz $^1$H-NMR. The measurement results are shown in Table 7.

Production of Solution-polymerized SBR (S-SBR)

Production Example 1

In a 800 mL pressure resistant glass vessel having been dried and substituted with nitrogen, a cyclohexane solution of 1,3-butadiene and a cyclohexane solution of styrene were placed to make 60 g of 1.3-butadiene and 15 g of styrene in the vessel, 0.70 mmol of 2,2-ditetrahydrofurylpropane was placed, and 0.70 mmol of n-butyllithium (BuLi) was further added, which were then subjected to polymerization reaction over a warm water bath at 50°C for 1.5 hours. The polymerization conversion herein was substantially 100%.

Post-Polymerization Process

An isopropanol solution of 2,6-di-tert-butyl-p-cresol (BHT) was then added to the polymerization reaction system to terminate the polymerization reaction. Thereafter, the product was dried in vacuum to provide solution-polymerized SBR (S-SBR). The resulting solution-polymerized S-SBR had a bonded styrene content of 20% and a bonded vinyl content in the butadiene portion of 55%. The solution-polymerized S-SBR was used as a rubber component (G).

E-SBR having varying emulsifier contents were prepared according to the following manner.

Production Example 2

Approximately 0.5 kg of commercially available E-SBR (SBR #1500, styrene content: 23.5%, emulsifier: rosinate soap) containing 6.39 parts by mass of a residue of an organic acid per 100 parts by mass of a rubber component was placed in a cylindrical stainless steel vessel having a capacity of 20 L equipped with a ball valve on the sidewall in the lower part of the vessel, to which 10 L of cyclohexane of guaranteed reagent grade, produced by Kanto Chemical Co., Inc., was added, and the mixture was agitated until uniform dissolution with an agitation mixer equipped with a shaft having Teflon (trade name) blades. A 0.1 N KOH aqueous solution was added to the solution under agitation to control the pH of the aqueous phase to 10 to 11. The solution was agitated for 13 hours and then allowed to stand with the agitation stopped. After the aqueous phase and the organic phase were roughly separated, the aqueous phase was discharged from the ball valve in the lower part of the stainless steel vessel. An operation that approximately 3 L of ion exchanged water was added to the organic phase in the vessel, followed by agitating for 30 minutes, and then the aqueous phase was discharged, was repeated five times to remove the organic acid component from the organic phase. On the five addition operations of ion exchanged water in the repetition of the extraction operation, 0.1 N sulfuric acid was added to control the pH of the aqueous phase to 5 to 6, followed by agitating for 30 minutes, and then the aqueous phase was discharged. Thereafter, 1 g of an antiaging agent 6PPD was added to the organic phase in the vessel, followed by sufficiently agitating. Thereafter, the solvent was distilled off by an ordinary manner, and the resulting solid was dried in a vacuum oven at 60°C for 2.5 hours, thereby providing E-SBR (1). The measurement of the organic acid contained in the dried polymer revealed that 0.47 part by mass of the residue of an organic acid was contained.

Production Example 3

E-SBR (2) was obtained in the same manner as in Production Example 2 except that the extraction operation with ion exchanged water was repeated three times. The measurement of the organic acid content contained in the dried polymer revealed that 1.24 parts by mass of the residue of an organic acid was contained.

Production Example 4

E-SBR (3) was obtained in the same manner as in Production Example 2 except that the extraction operation with ion exchanged water was repeated twice. The measurement of the organic acid content contained in the dried polymer revealed that 2.21 parts by mass of the residue of an organic acid was contained.

Production Example 5

E-SBR (4) was obtained in the same manner as in Production Example 2 except that the extraction operation with ion exchanged water was performed once. The measurement of the organic acid content contained in the dried polymer revealed that 3.82 parts by mass of the residue of an organic acid was contained.

Preparation of Rubber Composition

The rubber compositions were prepared according to the formulations shown in Table 1 by using the S-SBR obtained in Production Example 1 as the additional rubber component (G) and using the E-SBR obtained in Production Examples 2 to 5 and "E-SBR #1500", produced by JSR Corporation, as the polymer component (B).

The polymer component (B), the additional rubber component (G), the organic acid residue (A) and stearic acid (D) were mixed according to the description in Tables 2 to 6.

Table 1

| Formulation | part by mass |
|---|---|
| Polymer component (B) | variable |
| Additional rubber component (G) | variable |
| Oil | 10 |
| Carbon black *1 | 35 |
| Silica *2 | 35 |
| Silane coupling agent *3 | 2.5 |

(continued)

| Formulation | part by mass |
|---|---|
| Organic acid residue (A) | variable |
| Stearic acid (D) | variable |
| Antiaging agent 6C *4 | 1 |
| Zinc flower | 3 |
| Vulcanization accelerator DPG *5 | 1 |
| Vulcanization accelerator DM *6 | 1 |
| Vulcanization accelerator CZ *7 | 1 |
| Sulfur | 1.5 |
| 1: carbon black: HAF (N330), "Asahi #70", produced by Asahi Carbon Co., Ltd.<br>*2: silica: "Nipsil AQ", a trade name, produced by Tosoh Silica Corporation<br>*3: silane coupling agent: bis(3-triethoxysilylpropyl) tetrasulfide, "Si69", a trade name (registered trademark), produced by Degussa AG<br>*4: antiaging agent 6C: N-(1,3-dimethylbutyl)-N'-phenyl-p-phenylenediamine, "Nocrac 6C", a trade name, produced by Ouchi Shinko Chemical Industrial Co., Ltd.<br>*5: vulcanization accelerator DPG: diphenylguanidine, "Nocceler D", a trade name, produced by Ouchi Shinko Chemical Industrial Co., Ltd.<br>*6: vulcanization accelerator DM: dibenzothiazyl disulfide, "Nocceler DM", a trade name, produced by Ouchi Shinko Chemical Industrial Co., Ltd.<br>*7: vulcanization accelerator CZ: N-cyclohexyl-2-benzothiazyl sulfenamide, "Nocceler CZ", a trade name, produced by Ouchi Shinko Chemical Industrial Co., Ltd.<br>Examples that are included by way of reference only are highlighed in the following tables by mark with a "*". | |

Examples 1 to 4 and Comparative Example 1

1.3 parts by mass of stearic acid as the component (D) was mixed with 100 parts by mass of the polymer components (B) containing varying amounts of the organic acid residue (A), and the compositions were evaluated for the tan$\delta$ (low heat build-up property) and the wear resistance. The evaluation results are shown in Table 2.

Table 2

| | Example 1 (*) | Example 2 (*) | Example 3 (*) | Example 4 (*) | Comparative Example 1 |
|---|---|---|---|---|---|
| (B) E-SBR | E-SBR (1) | E-SBR (2) | E-SBR (3) | E-SBR (4) | SBR #1500 |
| (part by mass) | 100 | 100 | 100 | 100 | 100 |
| (A) (part by mass) | 0.47 | 1.24 | 2.21 | 3.82 | 6.39 |
| (D) (part by mass) | 1.30 | 1.30 | 1.30 | 1.30 | 1.30 |
| (A)+(D) (part by mass) | 1.77 | 2.54 | 3.51 | 5.12 | 7.69 |
| tan$\delta$ (index) | 115 | 108 | 105 | 102 | 100 |
| wear resistance (index) | 111 | 107 | 104 | 102 | 100 |
| (*) - included by way of reference only | | | | | |

Examples 5 to 8 and Comparative Example 2

1.3 parts by mass of stearic acid as the component (D) was mixed with 100 parts by mass in total including 80 parts by mass of the polymer components (B) containing varying amounts of the organic acid residue (A) and 20 parts by mass of the additional rubber component (G), and the compositions were evaluated for the tan$\delta$ (low heat build-up property) and the wear resistance. The evaluation results are shown in Table 3.

Table 3

| | Example 5 (*) | Example 6 (*) | Example 7 (*) | Example 8 (*) | Comparative Example 2 |
|---|---|---|---|---|---|
| (B) E-SBR | E-SBR (1) | E-SBR (2) | E-SBR (3) | E-SBR (4) | SBR #1500 |
| (part by mass) | 80 | 80 | 80 | 80 | 80 |
| (G) S-SBR (part by mass) | 20 | 20 | 20 | 20 | 20 |
| (A) (part by mass) | 0.38 | 0.99 | 1.77 | 3.06 | 5.11 |
| (D) (part by mass) | 1.30 | 1.30 | 1.30 | 1.30 | 1.30 |
| (A)+(D) (part by mass) | 1.68 | 2.29 | 3.07 | 4.36 | 6.41 |
| tanδ (index) | 113 | 109 | 104 | 102 | 100 |
| wear resistance (index) | 110 | 107 | 104 | 102 | 100 |
| (*) - included by way of reference only | | | | | |

Examples 9 and 10 and Comparative Example 3

5.0 parts by mass of stearic acid as the component (D) was mixed with 100 parts by mass in total including 20 parts by mass of the polymer components (B) containing varying amounts of the organic acid residue (A) and 80 parts by mass of the additional rubber component (G), and the compositions were evaluated for the tanδ (low heat build-up property) and the wear resistance. The evaluation results are shown in Table 4.

Table 4

| | Example 9 (*) | Example 10 (*) | Comparative Example 3 |
|---|---|---|---|
| (B) E-SBR | E-SBR (1) | E-SBR (3) | SBR #1500 |
| (part by mass) | 20 | 20 | 20 |
| (G) S-SBR (part by mass) | 80 | 80 | 80 |
| (A) (part by mass) | 0.09 | 0.44 | 1.28 |
| (D) (part by mass) | 5.00 | 5.00 | 5.00 |
| (A)+(D) (part by mass) | 5.09 | 5.44 | 6.28 |
| tanδ (index) | 102 | 101 | 100 |
| wear resistance (index) | 103 | 101 | 100 |
| (*) - included by way of reference only | | | |

Examples 11 to 13 and Comparative Example 4

Varying amounts of stearic acid as the component (D) was mixed with 100 parts by mass of the polymer components (B) containing 0.47 part by mass of the organic acid residue (A), and the compositions were evaluated for the tanδ (low heat build-up property) and the wear resistance. The evaluation results are shown in Table 5.

Table 5

| | Example 11 (*) | Example 12 (*) | Example 13 (*) | Comparative Example 4 |
|---|---|---|---|---|
| (B) E-SBR | E-SBR (1) | E-SBR (1) | E-SBR (1) | E-SBR (1) |
| (part by mass) | 100 | 100 | 100 | 100 |
| (A) (part by mass) | 0.47 | 0.47 | 0.47 | 0.47 |
| (D) (part by mass) | 1.00 | 1.30 | 2.50 | 6.00 |
| (A)+(D) (part by mass) | 1.47 | 1.77 | 2.97 | 6.47 |

(continued)

| | Example 11 (*) | Example 12 (*) | Example 13 (*) | Comparative Example 4 |
|---|---|---|---|---|
| tanδ (index) | 120 | 115 | 106 | 100 |
| wear resistance (index) | 115 | 111 | 104 | 100 |
| (*) - included by way of reference only | | | | |

Examples 14 to 17 and Comparative Example 5

No stearic acid as the component (D) was mixed with 100 parts by mass of the polymer components (B) containing varying amounts of the organic acid residue (A), and the compositions were evaluated for the tanδ (low heat build-up property) and the wear resistance. The evaluation results are shown in Table 6.

Table 6

| | Example 14 (*) | Example 15 (*) | Example 16 (*) | Example 17 (*) | Comparative Example 5 |
|---|---|---|---|---|---|
| (B) E-SBR | E-SBR (1) | E-SBR (2) | E-SBR (3) | E-SBR (4) | SBR #1500 |
| (part by mass) | 100 | 100 | 100 | 100 | 100 |
| (A) (part by mass) | 0.47 | 1.24 | 2.21 | 3.82 | 6.39 |
| (D) (part by mass) | 0.00 | 0.00 | 0.00 | 0.00 | 0.00 |
| (A)+(D) (part by mass) | 0.47 | 1.24 | 2.21 | 3.82 | 6.39 |
| tanδ (index) | 127 | 118 | 110 | 104 | 100 |
| wear resistance (index) | 123 | 116 | 109 | 104 | 100 |
| (*) - included by way of reference only | | | | | |

As shown in Tables 2 to 6, it is understood that Examples according to the present invention are excellent in the low heat build-up property (tanδ) and the wear resistance. In particular, it is understood that the compositions containing 1.0 part by mass or less of the component (A) and a total amount of the component (A) and the component (D) of 1.8 parts by mass or less are excellent in both the properties.

Production of Solution-polymerized SBR (S-SBR)

Production Example 6

Production S-SBR L

In a 800 mL pressure resistant glass vessel having been dried and substituted with nitrogen, a cyclohexane solution of 1,3-butadiene and a cyclohexane solution of styrene were placed to make 60 g of 1,3-butadiene and 15 g of styrene in the vessel, 0.29 mmol of 2,2-ditetrahydrofurylpropane was placed, and 0.57 mmol of n-butyllithium (BuLi) was further added, which were then subjected to polymerization reaction over a warm water bath at 50°C for 1.5 hours. The polymerization conversion herein was substantially 100%.

Thereafter, 0.5 mL of a 5% by mass isopropanol solution of 2,6-di-tert-butyl-p-cresol was added to the polymerization reaction system to terminate the polymerization reaction, and the product was dried by an ordinary method to provide SBR L. The bonded styrene content (St content) and the bonded vinyl content (Vi content) in the butadiene portion of the resulting SBR L are shown in Table 7.

Production of S-SBR having Modified Portion (E) capable of reacting with Filler

Production Example 7

Production of S-SBR M

In a 800 mL pressure resistant glass vessel having been dried and substituted with nitrogen, a cyclohexane

solution of 1,3-butadiene and a cyclohexane solution of styrene were placed to make 60 g of 1,3-butadiene and 15 g of styrene in the vessel, 0.36 mmol of 2,2-ditetrahydrofurylpropane was placed, and 0.72 mmol of n-butyllithium (BuLi) was further added, which were then subjected to polymerization reaction over a warm water bath at 50°C for 1.5 hours. The polymerization conversion herein was substantially 100%.

0.65 mmol of N,N-bis(trimethylsilyl)-3-aminopropylmethyldiethoxysilane was then added to the polymerization reaction system, and modification reaction was performed at 50°C for 30 minutes. Thereafter, 0.5 mL of a 5% by mass isopropanol solution of 2,6-di-tert-butyl-p-cresol was added to the polymerization reaction system to terminate the polymerization reaction, and the product was dried by an ordinary method to provide SBR M. The bonded styrene content (St content) and the bonded vinyl content (Vi content) in the butadiene portion of the resulting SBR M are shown in Table 7.

Production Examples 8 and 9

Production of S-SBR N and O

S-SBR N and O were obtained in the same manner as in the production of SBR M except that the modifying agents shown in Table 7 were used instead of N,N-bis(trimethylsilyl)-3-aminopropylmethyldiethoxysilane. The bonded styrene content (St content) and the bonded vinyl content (Vi content) in the butadiene portion of the resulting S-SBR N and O are shown in Table 7.

Production Example 10

Production of S-SBR P

In a 800 mL pressure resistant glass vessel having been dried and substituted with nitrogen, a cyclohexane solution of 1,3-butadiene and a cyclohexane solution of styrene were placed to make 60 g of 1,3-butadiene and 15 g of styrene in the vessel, and 0.72 mmol of hexamethyleneimine, 0.72 mmol of n-butyllithium and 0.36 mmol of 2,2-ditetrahydrofurylpropane were sequentially placed, which were then subjected to polymerization reaction at 50°C for 2.5 hours. The polymerization conversion herein was substantially 100%.

Thereafter, 0.5 mL of a 5% by mass isopropanol solution of 2,6-di-tert-butyl-p-cresol was added to the polymerization reaction system to terminate the polymerization reaction, and the product was precipitated in a slight amount of hydrochloric acid and isopropanol, and then dried by an ordinary method to provide S-SBR P. The bonded styrene content (St content) and the bonded vinyl content (Vi content) in the butadiene portion of the resulting SBR P are shown in Table 7.

Production Example 11

Production of S-SBR Q

In a 800 mL pressure resistant glass vessel having been dried and substituted with nitrogen, a cyclohexane solution of 1,3-butadiene and a cyclohexane solution of styrene were placed to make 60 g of 1,3-butadiene and 15 g of styrene in the vessel, and 0.360 mmol of 2,2-tetrahydrofurylpropane and 3.6 mmol of N,N-bis(trimethylsilyl)-4-vinylaniline were placed, which were then subjected to polymerization reaction at 50°C for 1.5 hours. The polymerization conversion herein was substantially 100%. Thereafter, 0.5 mL of a 5% by mass isopropanol solution of 2,6-di-tert-butyl-p-cresol was added to the polymerization reaction system to terminate the polymerization reaction, and a slight amount of the polymer cement was analyzed by gas chromatography to confirm that the unreacted monomer compound derived from vinylaniline was not contained. The balance of the polymer cement was dried by an ordinary method to provide S-SBR Q. The bonded styrene content (St content) and the bonded vinyl content (Vi content) in the butadiene portion of the resulting SBR Q are shown in Table 7.

Examples 18 to 47

30 kinds of rubber compositions of Examples were prepared according to the formulations shown in Tables 8-1 and 8-2 using 10 kinds of rubber components including the non-modified S-SBR (Production Example 6), the modified polymers (Production Examples 7 to 11) as the component (F) having in the molecular structure thereof the modified portion (E) capable of reacting with the surface of the filler, and the E-SBR (1) to (4) (Production Examples 2 to 5) as the component (B) having varying amounts of the organic acid residue (A). Specimens thereof for evaluation were vulcanized by an ordinary method, and evaluated for the low heat build-up property (tanδ) and the wear resistance. The evaluation results are shown in Tables 8-1 and 8-2.

As shown in Tables 8-1 and 8-2, it is understood that the low heat build-up property and the wear resistance are further enhanced in the case where the rubber component contains from 5 to 90 parts by mass of the modified polymer (F) having in the molecular structure thereof the modified portion (E) capable of reacting with the surface of the filler on mixing and from 95 to 10 parts by mass of the polymer component (B), in which the polymer component (B) contains the residue of an organic acid (A) added in the production process of the polymer, and the rubber composition contains from 10 to 150 parts by mass of the reinforcing filler (C), and 3.5 parts by mass or less in total of the component (A) and the organic acid (D) added on mixing, per 100 parts by mass of the rubber component.

Table 7

| Modified polymer | Name of modifying agent | Addition amount | St content | Vi content | Synthesis example |
|---|---|---|---|---|---|
| S-SBR L | - | | 19.6 | 57.4 | Production Example 6 |
| S-SBR M | N,N-bis(trimethylsilyl)-3-aminopropylmethyldiethoxysilane | 0.65 mmol | 20.2 | 56.9 | Production Example 7 |
| S-SBR N | 3-(1,3-dimethylbutylidene)-aminopropyltriethoxysilane | 0.65 mmol | 19.9 | 57.0 | Production Example 8 |
| S-SBR O | 1,3-dimethyl-2-imidazolidinone | 0.65 mmol | 19.7 | 58.2 | Production Example 9 |
| S-SBR P | hexamethyleneimine | 0.72 mmol | 20.0 | 58.2 | Production Example 10 |
| S-SBR Q | N,N-bis(trimethylsilyl)-4-vinylaniline | 3.60 mmol | 21.1 | 58.5 | Production Example 11 |

Table 8

| Formulation (part by mass) | Example (*)- included by way of reference only | | | | | Example | | | | | Example | | | | |
|---|---|---|---|---|---|---|---|---|---|---|---|---|---|---|---|
| | 18* | 19* | 20* | 21* | 22* | 23 | 24 | 25 | 26 | 27 | 28 | 29 | 30 | 31 | 32 |
| Non-modified S-SBR L | 50 | 50 | 50 | 50 | 50 | - | - | - | - | - | - | - | - | - | - |
| Component (F) Modified SBR M | - | - | - | - | - | 50 | 50 | 50 | 50 | 50 | - | - | - | - | - |
| Component (F) Modified SBR N | - | - | - | - | - | - | - | - | - | - | 50 | 50 | 50 | 50 | 50 |
| Component (B) E-SBR (1) | 50 | - | - | - | - | 50 | - | - | - | - | 50 | - | - | - | - |
| Component (B) E-SBR (2) | - | 50 | - | - | - | - | 50 | - | - | - | - | 50 | - | - | - |
| Component (B) E-SBR (3) | - | - | 50 | - | - | - | - | 50 | - | - | - | - | 50 | - | - |
| Component (B) E-SBR (4) | - | - | - | 50 | - | - | - | - | 50 | - | - | - | - | 50 | - |
| Component (B) SBR #1500 | - | - | - | - | 50 | - | - | - | - | 50 | - | - | - | - | 50 |
| Component (A) Organic acid residue | 0.24 | 0.62 | 1.12 | 1.91 | 3.2 | 0.24 | 0.62 | 1.12 | 1.91 | 3.2 | 0.24 | 0.62 | 1.12 | 1.91 | 3.2 |
| Component (D) Stearic acid | 0.75 | 0.75 | 0.75 | 0.75 | 0.75 | 0.75 | 0.75 | 0.75 | 0.75 | 0.75 | 0.75 | 0.75 | 0.75 | 0.75 | 0.75 |
| (A) + (D) | 0.99 | 1.37 | 1.87 | 2.66 | 3.95 | 0.99 | 1.37 | 1.87 | 2.66 | 3.95 | 0.99 | 1.37 | 1.87 | 2.66 | 3.95 |
| Oil | 10 | 10 | 10 | 10 | 10 | 10 | 10 | 10 | 10 | 10 | 10 | 10 | 10 | 10 | 10 |
| Carbon black *11 | 35 | 35 | 35 | 35 | 35 | 35 | 35 | 35 | 35 | 35 | 35 | 35 | 35 | 35 | 35 |
| Silica *12 | 35 | 35 | 35 | 35 | 35 | 35 | 35 | 35 | 35 | 35 | 35 | 35 | 35 | 35 | 35 |
| Silane coupling agent *13 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| Antiaging agent 6C *14 | 1 | 1 | 1 | 1 | 1 | 1 | 1 | 1 | 1 | 1 | 1 | 1 | 1 | 1 | 1 |
| Zinc Flower | 3 | 3 | 3 | 3 | 3 | 3 | 3 | 3 | 3 | 3 | 3 | 3 | 3 | 3 | 3 |
| Vulcanization accelerator DPG *15 | 1 | 1 | 1 | 1 | 1 | 1 | 1 | 1 | 1 | 1 | 1 | 1 | 1 | 1 | 1 |
| Vulcanization accelerator DM *16 | 1 | 1 | 1 | 1 | 1 | 1 | 1 | 1 | 1 | 1 | 1 | 1 | 1 | 1 | 1 |
| Vulcanization accelerator CZ *17 | 1 | 1 | 1 | 1 | 1 | 1 | 1 | 1 | 1 | 1 | 1 | 1 | 1 | 1 | 1 |
| Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| (tanδ) Low heat build-up property | 95 | 97 | 98 | 98 | 100 | 195 | 184 | 176 | 169 | 161 | 180 | 168 | 157 | 149 | 146 |

(continued)

| Formulation (part by mass) | Example (*)- included by way of reference only | | | | | Example | | | | | Example | | | | |
|---|---|---|---|---|---|---|---|---|---|---|---|---|---|---|---|
| | 18* | 19* | 20* | 21* | 22* | 23 | 24 | 25 | 26 | 27 | 28 | 29 | 30 | 31 | 32 |
| Wear resistance | 96 | 98 | 99 | 101 | 100 | 118 | 116 | 114 | 112 | 112 | 117 | 114 | 113 | 111 | 110 |

Note : *11: carbon black: HAF (N330), "Asahi #70", produced by Asahi Carbon Co., Ltd.
*12: silica: "Nipsil AQ", a trade name (registered trademark), produced by Tosoh Silica Corporation
*13: silane coupling agent: bis (3-triethoxysilylpropyl) tetrasulfide, "Si69", a trade name (registered trademark), produced by Degussa AG
*14: antiaging agent 6C: N-(1,3-dimethylbutyl)-N'-phenyl-p-phenylenediamine, "Nocrac 6C", a trade name, produced by Ouchi Shinko Chemical Industrial Co., Ltd.
*15: vulcanization accelerator DPG: diphenylguanidine, "Nocceler D", a trade name, produced by Ouchi Shinko Chemical Industrial Co., Ltd.
*16: vulcanization accelerator DM: dibenzothiazyl disulfide, "Nocceler DM", a trade name, produced by Ouchi Shinko Chemical Industrial Co., Ltd.
*17: vulcanization accelerator CZ: N-cyclohexyl-2-benzothiazyl sulfenamide, "Nocceler CZ", a trade name, produced by Ouchi Shinko Chemical Industrial Co., Ltd.

Table 8-2

| Formulation (part by mass) | Example | | | | | Example | | | | | Example | | | | |
|---|---|---|---|---|---|---|---|---|---|---|---|---|---|---|---|
| | 33 | 34 | 35 | 36 | 37 | 38 | 39 | 40 | 41 | 42 | 43 | 44 | 45 | 46 | 47 |
| Component (F) Modified SBR O | 50 | 50 | 50 | 50 | 50 | - | - | - | - | - | - | - | - | - | - |
| Component (F) Modified SBR P | - | - | - | - | - | 50 | 50 | 50 | 50 | 50 | - | - | - | - | - |
| Component (F) Modified SBR Q | - | - | - | - | - | - | - | - | - | - | 50 | 50 | 50 | 50 | 50 |
| Component (B) E-SBR (1) | 50 | - | - | - | - | 50 | - | - | - | - | 50 | - | - | - | - |
| Component (B) E-SBR (2) | - | 50 | - | - | - | - | 50 | - | - | - | - | 50 | - | - | - |
| Component (B) E-SBR (3) | - | - | 50 | - | - | - | - | 50 | - | - | - | - | 50 | - | - |
| Component (B) E-SBR (4) | - | - | - | 50 | - | - | - | - | 50 | - | - | - | - | 50 | - |
| Component (B) SBR #1500 | - | - | - | - | 50 | - | - | - | - | 50 | - | - | - | - | 50 |
| Component (A) Organic acid residue | 0.24 | 0.62 | 1.12 | 1.91 | 3.2 | 0.24 | 0.62 | 1.12 | 1.91 | 3.2 | 0.24 | 0.62 | 1.12 | 1.91 | 3.2 |
| Component (D) Stearic acid | 0.75 | 0.75 | 0.75 | 0.75 | 0.75 | 0.75 | 0.75 | 0.75 | 0.75 | 0.75 | 0.75 | 0.75 | 0.75 | 0.75 | 0.75 |
| (A) + (D) | 0.99 | 1.37 | 1.87 | 2.66 | 3.95 | 0.99 | 1.37 | 1.87 | 2.66 | 3.95 | 0.99 | 1.37 | 1.87 | 2.66 | 3.95 |
| Oil | 10 | 10 | 10 | 10 | 10 | 10 | 10 | 10 | 10 | 10 | 10 | 10 | 10 | 10 | 10 |
| Carbon black *11 | 35 | 35 | 35 | 35 | 35 | 35 | 35 | 35 | 35 | 35 | 35 | 35 | 35 | 35 | 35 |
| Silica *12 | 35 | 35 | 35 | 35 | 35 | 35 | 35 | 35 | 35 | 35 | 35 | 35 | 35 | 35 | 35 |
| Silane coupling agent *13 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| Antiaging agent 6C *14 | 1 | 1 | 1 | 1 | 1 | 1 | 1 | 1 | 1 | 1 | 1 | 1 | 1 | 1 | 1 |
| Zinc Flower | 3 | 3 | 3 | 3 | 3 | 3 | 3 | 3 | 3 | 3 | 3 | 3 | 3 | 3 | 3 |
| Vulcanization accelerator DPG *15 | 1 | 1 | 1 | 1 | 1 | 1 | 1 | 1 | 1 | 1 | 1 | 1 | 1 | 1 | 1 |
| Vulcanization accelerator DM *16 | 1 | 1 | 1 | 1 | 1 | 1 | 1 | 1 | 1 | 1 | 1 | 1 | 1 | 1 | 1 |
| Vulcanization accelerator CZ *17 | 1 | 1 | 1 | 1 | 1 | 1 | 1 | 1 | 1 | 1 | 1 | 1 | 1 | 1 | 1 |
| Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| (tanδ) Low heat build-up property | 192 | 180 | 168 | 159 | 156 | 157 | 149 | 143 | 139 | 137 | 208 | 194 | 180 | 172 | 168 |
| Wear resistance | 109 | 108 | 196 | 105 | 105 | 116 | 113 | 110 | 109 | 108 | 126 | 121 | 119 | 118 | 116 |

Production Example 12

Production of Emulsion-polymerized SBR B

Emulsion-polymerized SBR having varying emulsifier contents were prepared according to the following manner.

Approximately 0.5 kg of commercially available emulsion-polymerized SBR (SBR #1500, styrene content: 23.5%, emulsifier: rosinate soap) containing 6.39 parts by mass of a residue of an organic acid per 100 parts by mass of a rubber component was placed in a cylindrical stainless steel vessel having a capacity of 200 L equipped with a ball valve on the sidewall in the lower part of the vessel, to which cyclohexane of guaranteed reagent grade, produced by Kanto Chemical Co., Inc., was added, and the mixture was agitated until uniform dissolution with an agitation mixer equipped with a shaft having Teflon (trade name) blades. A 0.1 N KOH aqueous solution was added to the solution under agitation to control the pH of the aqueous phase to 10 to 11. The solution was agitated for 13 hours and then allowed to stand with the agitation stopped. After the aqueous phase and the organic phase were roughly separated, the aqueous phase was discharged from the ball valve in the lower part of the stainless steel vessel. An operation that approximately 3 L of ion exchanged water was added to the organic phase in the vessel, followed by agitating for 30 minutes, and then the aqueous phase was discharged, was repeated twice to remove the organic acid component from the organic phase. On the two addition operations of ion exchanged water in the repetition of the extraction operation, 0.1 N sulfuric acid was added to control the pH of the aqueous phase to 5 to 6, followed by agitating for 30 minutes, and then the aqueous phase was discharged. Thereafter, 1 g of an antiaging agent 6PPD was added to the organic phase in the vessel, followed by sufficiently agitating. Thereafter, the solvent was distilled off by an ordinary manner, and the resulting solid was dried in a vacuum oven at 60°C for 2.5 hours, thereby providing emulsion-polymerized SBR B. The measurement of the organic acid contained in the dried polymer revealed that 2.13 parts by mass of the residue of an organic acid was contained.

Production Example 13

Production of Solution-polymerized SBR C

In a 800 mL pressure resistant glass vessel having been dried and substituted with nitrogen, a cyclohexane solution of 1,3-butadiene and a cyclohexane solution of styrene were placed to make 60 g of 1,3-butadiene and 15 g of styrene in the vessel, 0.70 mmol of 2,2-ditetrahydrofurylpropane was placed, and 0.70 mmol of n-butyllithium (BuLi) was further added, which were then subjected to polymerization reaction over a warm water bath at 50°C for 1.5 hours. The polymerization conversion herein was substantially 100%.

Post-Polymerization Process

An isopropanol solution of 2,6-di-tert-butyl-p-cresol (BHT) was then added to the polymerization reaction system to terminate the polymerization reaction. Thereafter, the product was dried in vacuum to provide solution-polymerized SBR (S-SBR). The resulting solution-polymerized S-SBR had a bonded styrene content of 20% and a bonded vinyl content in the butadiene portion of 55%.

Production Example 14

Production of Solution-polymerized SBR D

The polymerization was performed in the same manner as in the solution-polymerized SBR C in Production Example 13, and after the polymerization conversion reached approximately 100%, 0.20 mmol of tin tetrachloride ($SnCl_4$) was added, followed by performing modification reaction for 30 minutes. Thereafter, an isopropanol solution of 2,6-di-tert-butyl-p-cresol (BHT) was added to terminate the modification reaction. Thereafter, the product was dried in vacuum to provide solution-polymerized SBR D.

Production Example 15

Production of Solution-polymerized SBR E

Solution-polymerized SBR E was obtained in the same manner as in the solution-polymerized SBR C in Production Example 13 except that lithium hexamethyleneimide (HMI-Li, hexamethyleneimine (HMI) / lithium (Li) molar

ratio: 0.9) prepared in the polymerization system was used as a polymerization initiator in an amount of 0.70 mmol in terms of lithium equivalent.

Examples 48 to 65 and Comparative Examples 6 to 14

27 kinds of rubber compositions were prepared according to the formulations and the kneading methods shown in Tables 9 to 12 by kneading with a Banbury mixer that was controlled to make the maximum temperature of the rubber composition in the first step of kneading 150°C. In the first step of kneading of the 12 kinds of the rubber compositions of Examples 48 to 56 and Comparative Examples 8, 11 and 14 shown in Tables 9 and 10, the rubber component (R), the whole of the inorganic filler (T) and the silane coupling agent (U) were kneaded in the first step of kneading, and then 1,3-diphenylguanidine as a guanidine compound, N-cyclohexyl-2-benzothiazolyl sulfenamide as the sulfenamide compound or 2-mercaptobenzothiazole as the thiazole compound was added as the vulcanization accelerator (V), followed by further kneading. In the first step of kneading of the 6 kinds of the rubber compositions of Comparative Examples 6, 7, 9, 10, 12 and 13, on the other hand, no vulcanization accelerator (V) was added. In the 9 kinds of the rubber compositions of Examples 57 to 65, the vulcanization accelerator (V) was added in the second step of kneading. The resulting 27 kinds of the rubber compositions were evaluated for the low heat build-up property (tanδ index) in the aforementioned manner. The results are shown in Tables 9 to 12.

Table 9

| Part by mass | | | Example (*)– included by way of reference only | | | Comparative Example | | | | | | | | |
|---|---|---|---|---|---|---|---|---|---|---|---|---|---|---|
| | | | 48* | 49* | 50* | 6 | 7 | 8 | 9 | 10 | 11 | 12 | 13 | 14 |
| Formulation | First step of kneading | Emulsion-polymerized SBR A *21 | - | - | - | 50 | - | 50 | 50 | - | 50 | 50 | - | 50 |
| | | Emulsion-polymerized SBR B *22 | 50 | 50 | 50 | - | 50 | - | - | 50 | - | - | 50 | - |
| | | Solution-polymerized SBR C *23 | 50 | - | - | 50 | 50 | 50 | - | - | - | - | - | - |
| | | Solution-polymerized SBR D *24 | - | 50 | - | - | - | - | 50 | 50 | 50 | - | - | - |
| | | Solution-polymerized SBR E *25 | - | - | 50 | - | - | - | - | - | - | 50 | 50 | 50 |
| | | Carbon black N220 *26 | 10 | 10 | 10 | 10 | 10 | 10 | 10 | 10 | 10 | 10 | 10 | 10 |
| | | Silica *27 | 50 | 50 | 50 | 50 | 50 | 50 | 50 | 50 | 50 | 50 | 50 | 50 |
| | | Silane coupling agent Si75 *28 | 5.0 | 5.0 | 5.0 | 5.0 | 5.0 | 5.0 | 5.0 | 5.0 | 5.0 | 5.0 | 5.0 | 5.0 |
| | | Aromatic oil | 30 | 30 | 30 | 30 | 30 | 30 | 30 | 30 | 30 | 30 | 30 | 30 |
| | | Stearic acid | - | - | - | 2.0 | 2.0 | - | 2.0 | 2.0 | - | 2.0 | 2.0 | - |
| | | Antiaging agent 6PPD *29 | - | - | - | 1.0 | 1.0 | - | 1.0 | 1.0 | - | 1.0 | 1.0 | - |
| | | 1,3-diphenylguanidine *30 | 1.0 | 1.0 | 1.0 | - | - | 1.0 | - | - | 1.0 | - | - | 1.0 |
| | Final step of kneading | Stearic acid | 2.0 | 2.0 | 2.0 | - | - | 2.0 | - | - | 2.0 | - | - | 2.0 |
| | | Antiaging agent 6PPD *29 | 1.0 | 1.0 | 1.0 | - | - | 1.0 | - | - | 1.0 | - | - | 1.0 |
| | | Antiaging agent TMDQ *31 | 1.0 | 1.0 | 1.0 | - | - | 1.0 | - | - | 1.0 | - | - | 1.0 |
| | | Zinc flower | 2.5 | 2.5 | 2.5 | 2.5 | 2.5 | 2.5 | 2.5 | 2.5 | 2.5 | 2.5 | 2.5 | 2.5 |
| | | 1,3-diphenylguanidine *30 | 0.6 | 0.6 | 0.6 | 0.6 | 0.6 | 0.6 | 0.6 | 0.6 | 0.6 | 0.6 | 0.6 | 0.6 |
| | | Vulcanization accelerator MBTS *32 | 1.0 | 1.0 | 1.0 | 1.0 | 1.0 | 1.0 | 1.0 | 1.0 | 1.0 | 1.0 | 1.0 | 1.0 |
| | | Vulcanization accelerator TBBS *33 | 0.6 | 0.6 | 0.6 | 0.6 | 0.6 | 0.6 | 0.6 | 0.6 | 0.6 | 0.6 | 0.6 | 0.6 |
| | | Sulfur | 1.5 | 1.5 | 1.5 | 1.5 | 1.5 | 1.5 | 1.5 | 1.5 | 1.5 | 1.5 | 1.5 | 1.5 |
| Organic acid per 100 parts by mass of rubber component in emulsion-polymerized SBR (part by mass) | | | 2.13 | 2.13 | 2.13 | 6.39 | 2.13 | 6.39 | 6.39 | 2.13 | 6.39 | 6.39 | 2.13 | 6.39 |
| Amount of organic acid in emulsion-polymerized SBR mixed ($\times 10^{-3}$ mol) | | | 4.2 | 4.2 | 4.2 | 12.6 | 4.2 | 12.6 | 19.6 | 11.2 | 11.2 | 19.6 | 11.2 | 11.2 |
| Amount of organic acid in first step of kneading ($\times 10^{-3}$ mol) | | | 4.2 | 4.2 | 4.2 | 19.6 | 11.2 | 12.6 | 19.6 | 11.2 | 12.6 | 19.6 | 11.2 | 12.6 |
| Amount of guanidine compound in first step of kneading ($\times 10^{-3}$ mol) | | | 4.7 | 4.7 | 4.7 | - | - | 4.7 | - | - | 4.7 | - | - | 4.7 |
| Low heat build-up property (index) | | | 124 | 127 | 133 | 100 | 103 | 107 | 103 | 106 | 110 | 108 | 115 | 111 |

Table 10

| Part by mass | | | Example (*)– included by way of reference only | | | | | | Comparative Example 6 |
|---|---|---|---|---|---|---|---|---|---|
| | | | 51* | 52* | 53* | 54* | 55* | 56* | |
| Formulation | First step of kneading | Emulsion-polymerized SBR A *21 | - | - | - | - | - | - | 50 |
| | | Emulsion-polymerized SBR B *22 | 50 | 50 | 50 | 50 | 50 | 50 | - |
| | | Solution-polymerized SBR C *23 | 50 | - | - | 50 | - | - | 50 |
| | | Solution-polymerized SBR D *24 | - | 50 | - | - | 50 | - | - |
| | | Solution-polymerized SBR E *25 | - | - | 50 | - | - | 50 | - |
| | | Carbon black N220 *26 | 10 | 10 | 10 | 10 | 10 | 10 | 10 |
| | | Silica *27 | 50 | 50 | 50 | 50 | 50 | 50 | 50 |
| | | Silane coupling agent Si75 *28 | 5.0 | 5.0 | 5.0 | 5.0 | 5.0 | 5.0 | 5.0 |
| | | Aromatic oil | 30 | 30 | 30 | 30 | 30 | 30 | 30 |
| | | Stearic acid | - | - | - | - | - | - | 2.0 |
| | | Antiaging agent 6PPD *29 | - | - | - | - | - | - | 1.0 |
| | | N-Cyclohexyl-2-benzothiazolyl sulfenamide *34 | 1.0 | 1.0 | 1.0 | - | - | - | - |
| | | 2-Mercaptobenzothiazole *35 | - | - | - | 1.0 | 1.0 | 1.0 | - |
| | Final step of kneading | Stearic acid | 2.0 | 2.0 | 2.0 | 2.0 | 2.0 | 2.0 | - |
| | | Antiaging agent 6PPD *29 | 1.0 | 1.0 | 1.0 | 1.0 | 1.0 | 1.0 | - |
| | | Antiaging agent TMDQ *31 | 1.0 | 1.0 | 1.0 | 1.0 | 1.0 | 1.0 | - |
| | | Zinc flower | 2.5 | 2.5 | 2.5 | 2.5 | 2.5 | 2.5 | 2.5 |
| | | 1,3-diphenylguanidine *30 | 0.6 | 0.6 | 0.6 | 0.6 | 0.6 | 0.6 | 0.6 |
| | | Vulcanization accelerator MBTS *32 | 1.0 | 1.0 | 1.0 | 1.0 | 1.0 | 1.0 | 1.0 |
| | | Vulcanization accelerator TBBS *33 | 0.6 | 0.6 | 0.6 | 0.6 | 0.6 | 0.6 | 0.6 |
| | | Sulfur | 1.5 | 1.5 | 1.5 | 1.5 | 1.5 | 1.5 | 1.5 |
| Organic acid per 100 parts by mass of rubber component in emulsion-polymerized SBR (part by mass) | | | 2.13 | 2.13 | 2.13 | 2.13 | 2.13 | 2.13 | 6.39 |
| Amount of organic acid in emulsion-polymerized SBR mixed ($\times 10^{-3}$ mol) | | | 4.2 | 4.2 | 4.2 | 4.2 | 4.2 | 4.2 | 12.6 |
| Amount of organic acid in first step of kneading ($\times 10^{-3}$ mol) | | | 4.2 | 4.2 | 4.2 | 4.2 | 4.2 | 4.2 | 19.6 |
| Amount of vulcanization accelerator in first step of kneading ($\times 10^{-3}$ mol) | | | 4.7 | 4.7 | 4.7 | 4.7 | 4.7 | 4.7 | - |
| Low heat build-up property (index) | | | 122 | 125 | 127 | 123 | 127 | 129 | 100 |

Table 11

| Part by mass | | | Example (*)– included by way of reference only | | | Comparative Example | | | | | |
|---|---|---|---|---|---|---|---|---|---|---|---|
| | | | 57* | 58* | 59* | 6 | 7 | 9 | 10 | 12 | 13 |
| Formulation | First step of kneading | Emulsion-polymerized SBR A *21 | - | - | - | 50 | - | 50 | - | 50 | - |
| | | Emulsion-polymerized SBR B *22 | 50 | 50 | 50 | - | 50 | - | 50 | - | 50 |
| | | Solution-polymerized SBR C *23 | 50 | - | - | 50 | 50 | - | - | - | - |
| | | Solution-polymerized SBR D *24 | - | 50 | - | - | - | 50 | 50 | - | - |
| | | Solution-polymerized SBR E *25 | - | - | 50 | - | - | - | - | 50 | 50 |
| | | Carbon black N220 *26 | 10 | 10 | 10 | 10 | 10 | 10 | 10 | 10 | 10 |
| | | Silica *27 | 50 | 50 | 50 | 50 | 50 | 50 | 50 | 50 | 50 |
| | | Silane coupling agent Si75 *28 | 5.0 | 5.0 | 5.0 | 5.0 | 5.0 | 5.0 | 5.0 | 5.0 | 5.0 |
| | | Aromatic oil | 30 | 30 | 30 | 30 | 30 | 30 | 30 | 30 | 30 |
| | | Stearic acid | - | - | - | 2.0 | 2.0 | 2.0 | 2.0 | 2.0 | 2.0 |
| | | Antiaging agent 6PPD *29 | - | - | - | 1.0 | 1.0 | 1.0 | 1.0 | 1.0 | 1.0 |
| | Second step of kneading | 1,3-diphenylguanidine *30 | 1.0 | 1.0 | 1.0 | - | - | - | - | - | - |
| | Final step of kneading | Stearic acid | 2.0 | 2.0 | 2.0 | - | - | - | - | - | - |
| | | Antiaging agent 6PPD *29 | 1.0 | 1.0 | 1.0 | - | - | - | - | - | - |
| | | Antiaging agent TMDQ *31 | 1.0 | 1.0 | 1.0 | - | - | - | - | - | - |
| | | Zinc flower | 2.5 | 2.5 | 2.5 | 2.5 | 2.5 | 2.5 | 2.5 | 2.5 | 2.5 |
| | | 1,3-diphenylguanidine *30 | 0.6 | 0.6 | 0.6 | 0.6 | 0.6 | 0.6 | 0.6 | 0.6 | 0.6 |
| | | Vulcanization accelerator MBTS *32 | 1.0 | 1.0 | 1.0 | 1.0 | 1.0 | 1.0 | 1.0 | 1.0 | 1.0 |
| | | Vulcanization accelerator TBBS *33 | 0.6 | 0.6 | 0.6 | 0.6 | 0.6 | 0.6 | 0.6 | 0.6 | 0.6 |
| | | Sulfur | 1.5 | 1.5 | 1.5 | 1.5 | 1.5 | 1.5 | 1.5 | 1.5 | 1.5 |
| Organic acid per 100 parts by mass of rubber component in emulsion-polymerized SBR (part by mass) | | | 2.13 | 2.13 | 2.13 | 6.39 | 2.13 | 6.39 | 2.13 | 6.39 | 2.13 |
| Amount of organic acid in emulsion-polymerized SBR mixed (× $10^{-3}$ mol) | | | 4.2 | 4.2 | 4.2 | 12.6 | 4.2 | 19.6 | 11.2 | 19.6 | 11.2 |
| Amount of organic acid in first step of kneading (× $10^{-3}$ mol) | | | 4.2 | 4.2 | 4.2 | 19.6 | 11.2 | 19.6 | 11.2 | 19.6 | 11.2 |
| Amount of guanidine compound in first step of kneading (× $10^{-3}$ mol) | | | - | - | - | - | - | - | - | - | - |
| Low heat build-up property (index) | | | 123 | 127 | 130 | 100 | 103 | 103 | 106 | 108 | 115 |

Table 12

| Part by mass | | | Example (*) – included by way of reference only | | | | | | Comparative Example 6 |
|---|---|---|---|---|---|---|---|---|---|
| | | | 60* | 61* | 62* | 63* | 64* | 65* | |
| Formulation | First step of kneading | Emulsion-polymerized SBR A *21 | - | - | - | - | - | - | 50 |
| | | Emulsion-polymerized SBR B *22 | 50 | 50 | 50 | 50 | 50 | 50 | - |
| | | Solution-polymerized SBR C *23 | 50 | - | - | 50 | - | - | 50 |
| | | Solution-polymerized SBR D *24 | - | 50 | - | - | 50 | - | - |
| | | Solution-polymerized SBR E *25 | - | - | 50 | - | - | 50 | - |
| | | Carbon black N220 *26 | 10 | 10 | 10 | 10 | 10 | 10 | 10 |
| | | Silica *27 | 50 | 50 | 50 | 50 | 50 | 50 | 50 |
| | | Silane coupling agent Si75 *28 | 5.0 | 5.0 | 5.0 | 5.0 | 5.0 | 5.0 | 5.0 |
| | | Aromatic oil | 30 | 30 | 30 | 30 | 30 | 30 | 30 |
| | | Stearic acid | - | - | - | - | - | - | 2.0 |
| | | Antiaging agent 6PPD *29 | - | - | - | - | - | - | 1.0 |
| | Second step of kneading | N-Cyclohexyl-2-benzothiazolyl sulfenamide *34 | 1.0 | 1.0 | 1.0 | - | - | - | - |
| | | 2-Mercaptobenzothiazole *35 | - | - | - | 1.0 | 1.0 | 1.0 | - |
| | Final step of kneading | Stearic acid | 2.0 | 2.0 | 2.0 | 2.0 | 2.0 | 2.0 | - |
| | | Antiaging agent 6PPD *29 | 1.0 | 1.0 | 1.0 | 1.0 | 1.0 | 1.0 | - |
| | | Antiaging agent TMDQ *31 | 1.0 | 1.0 | 1.0 | 1.0 | 1.0 | 1.0 | - |
| | | Zinc flower | 2.5 | 2.5 | 2.5 | 2.5 | 2.5 | 2.5 | 2.5 |
| | | 1,3-diphenylguanidine *30 | 0.6 | 0.6 | 0.6 | 0.6 | 0.6 | 0.6 | 0.6 |
| | | Vulcanization accelerator MBTS *32 | 1.0 | 1.0 | 1.0 | 1.0 | 1.0 | 1.0 | 1.0 |
| | | Vulcanization accelerator TBBS *33 | 0.6 | 0.6 | 0.6 | 0.6 | 0.6 | 0.6 | 0.6 |
| | | Sulfur | 1.5 | 1.5 | 1.5 | 1.5 | 1.5 | 1.5 | 1.5 |
| Organic acid per 100 parts by mass of rubber component in emulsion-polymerized SBR (part by mass) | | | 2.13 | 2.13 | 2.13 | 2.13 | 2.13 | 2.13 | 6.39 |
| Amount of organic acid in emulsion-polymerized SBR mixed ($\times 10^{-3}$ mol) | | | 4.2 | 4.2 | 4.2 | 4.2 | 4.2 | 4.2 | 12.6 |
| Amount of organic acid in first step of kneading ($\times 10^{-3}$ mol) | | | 4.2 | 4.2 | 4.2 | 4.2 | 4.2 | 4.2 | 19.6 |
| Amount of vulcanization accelerator in first step of kneading ($\times 10^{-3}$ mol) | | | - | - | - | - | - | - | - |
| Low heat build-up property (index) | | | 125 | 128 | 130 | 126 | 129 | 130 | 100 |

Note:

*21: emulsion-polymerized SBR, "#1500", a trade name, produced by JSR Corporation (styrene content: 23.5%, containing 6.39 parts by mass of organic acid residue derived from rosinate soap as emulsifier per 100 parts by mass of rubber component)
*22: emulsion-polymerized SBR B produced in Production Example 12 (containing 2.13 parts by mass of organic acid residue derived from rosinate soap as emulsifier per 100 parts by mass of rubber component)
*23: solution-polymerized SBR C produced in Production Example 13
*24: solution-polymerized SBR D produced in Production Example 14
*25: solution-polymerized SBR E produced in Production Example 15
*26: "#80", a trade name, produced by Asahi Carbon Co., Ltd.
*27: "Nipsil AQ", a trade name (registered trademark), produced by Tosoh Silica Corporation (BET surface area: 220 $m^2/g$)
*28: bis(3-triethoxysilylpropyl) disulfide (average sulfur chain length: 2.35), a silane coupling agent, "Si75", a trade name (registered trademark), produced by Evonik Industries AG
*29: N-(1,3-dimethylbutyl)-N'-phenyl-p-phenylenediamine, "Nocrac 6C", a trade name, produced by Ouchi Shinko Chemical Industrial Co., Ltd.
*30: 1,3-diphenylguanidine, "Sanceler D", a trade name, produced by Sanshin Chemical Industry Co., Ltd.
*31: 2,2,4-trimethyl-1,2-dihydroquinoline polymer, "Nocrac 224", a trade name, produced by Ouchi Shinko Chemical Industrial Co., Ltd.
*32: di-2-benzothiazolyl disulfide, "Sanceler DM", a trade name, produced by Sanshin Chemical Industry Co., Ltd.
*33: N-tert-butyl-2-benzothiazolyl sulfenamide, "Sanceler NS", a trade name, produced by Sanshin Chemical Industry Co., Ltd.
*34: "Nocceler CZ", a trade name, produced by Ouchi Shinko Chemical Industrial Co., Ltd.
*35: "Nocceler M", a trade name, produced by Ouchi Shinko Chemical Industrial Co., Ltd.

It is apparent from Tables 9 to 12 that the rubber compositions of Examples 48 to 65 had better low heat build-up property (tanδ index), as compared to the rubber compositions in Comparative Examples 6 to 14 that were to be compared.

Industrial Applicability

The rubber composition of the present invention provides a tire that is excellent in the low heat build-up property and the wear resistance by defining the total amount, with respect to the total mixed rubber, of the acid component including an organic acid, such as stearic acid, and an organic acid contained in a residue of an emulsifier added in a production process of an emulsion-polymerized SBR.

Furthermore, the sulfur-crosslinkable rubber composition of the present invention contains a rubber component containing from 5 to 90 parts by mass of a modified polymer (F) containing in a molecular structure thereof a modified portion (E) capable of reacting with a surface of the filler in a mixing step and from 95 to 10 parts by mass of the polymer component (B), in which the polymer component (B) contains a residue of an organic acid (A) added in a production process of the polymer, and the rubber composition contains from 10 to 150 parts by mass of a reinforcing filler (C), and 3.5 parts by mass or less in total of the component (A) and an organic acid (D) added on mixing, per 100 parts by mass of the rubber component, thereby providing particularly excellent interaction between the rubber component and carbon black and/or silica and improving dispensability of the filler, and thus a tire that is further excellent in the low heat build-up property and the wear resistance may be provided.

The tire of the present invention has the aforementioned properties and thus may be favorably used as various pneumatic tires including a radial tire for a passenger car, a radial tire for a light passenger car, a radial tire for a light truck, a radial tire for a truck or bus, and a tire for a construction vehicle.

In the process of producing a rubber composition containing emulsion-polymerized styrene-butadiene copolymer rubber according to the present invention, the activity reduction of the coupling function of the silane coupling agent may be favorably suppressed to enhance the activity of the coupling function, thereby providing a rubber composition excellent in the low heat build-up property. Accordingly, the production process of the present invention may be favorably applied to a production process of a rubber composition for various members of various pneumatic tires for a passenger car, a small track, a light passenger car, a light track, a large vehicle (for example, a track, a bus and a construction vehicle) and the like, particularly for a tread member of a pneumatic radial tire.

## Claims

1. A rubber composition comprising at least 10 parts by mass, in 100 parts by mass of a rubber component, of a polymer component (B) containing a residue of an organic acid (A) added in a production process of the polymer, and comprising from 10 to 150 parts by mass of a reinforcing filler (C), and 0.1 to 6 parts by mass in total of the residue of an organic acid (A) and an organic acid (D) used on mixing, per 100 parts by mass of the rubber component, wherein the rubber composition contains from 5 to 90 parts by mass of a modified polymer (F) containing in a molecular structure thereof a modified portion (E) capable of reacting with a surface of the filler in a mixing step, in 100 parts by mass of the rubber component, and
the modified portion (E) contains a functional group capable of undergoing acid-base reaction in the mixing step with the residue of an organic acid (A) and/or the organic acid (D) added on mixing.

2. The rubber composition according to claim 1, wherein the rubber composition contains 3.5 part by mass or less of the component (A) per 100 parts by mass of the polymer component (B).

3. The rubber composition according to claim 2, wherein the rubber composition contains 1.0 part by mass or less of the component (A) per 100 parts by mass of the polymer component (B).

4. The rubber composition according to any one of claims 1 to 3, wherein the component (B) contains natural rubber and/or a synthetic diene polymer.

5. The rubber composition according to claim 4, wherein the component (B) contains a synthetic diene polymer that is obtained by emulsion polymerization.

6. The rubber composition according to claim 5, wherein the component (B) contains a styrene-butadiene copolymer that is obtained by emulsion polymerization (E-SBR).

7. The rubber composition according to any one of claims 1 to 6, wherein the modified portion (E) contains a functional group capable of undergoing acid-base reaction in the mixing step with the reinforcing filler (C).

8. The rubber composition according to any one of claims 1 to 7, wherein the modified portion (E) is capable of undergoing acid-base reaction in the mixing step with the residue of an organic acid (A) and/or the organic acid (D) added on mixing, to form an onium cation.

9. The rubber composition according to any one of claims 1 to 8, wherein the modified portion (E) contains a nitrogen-containing functional group.

10. The rubber composition according to any one of claims 1 to 9, wherein the component (D) contains a fatty acid compound.

11. The rubber composition according to any one of claims 1 to 10, wherein the residue of an organic acid (A) added in a production process of the polymer as the component (B) contains at least one of a fatty acid compound, a resin acid compound, a carbolic acid compound and a rosin acid compound.

12. The rubber composition according to any one of claims 1 to 10, wherein the residue of an organic acid (A) added in a production process of the polymer as the component (B) contains a metal salt of a fatty acid compound, a metal salt of a resin acid compound, a metal salt of a carbolic acid compound or a metal salt of a rosin acid compound.

13. A tire comprising the rubber composition according to any one of claims 1 to 12 as a tread member or a sidewall member.

## Patentansprüche

1. Kautschukzusammensetzung umfassend, in 100 Masseteilen einer Kautschukkomponente, mindestens 10 Masseteile einer Polymerkomponente (B) enthaltend einen Rest einer organischen Säure (A), die in einem Herstellungsvorgang des Polymer zugegeben worden ist, und umfassend 10 bis 150 Masseteile eines Verstärkungsfüllstoffs (C) und 0,1 bis 6 Masseteile insgesamt des Rests einer organischen Säure (A) und einer organischen Säure (D),

die beim Mischen verwendet werden, pro 100 Masseteile der Kautschukkomponente,
wobei die Kautschukzusammensetzung 5 bis 90 Masseteile eines modifizierten Polymers (F), das in einer molekularen Struktur davon einen modifizierten Teil (E) enthält, der in der Lage ist, mit einer Oberfläche des Füllstoffes in einem Mischschritt zu reagieren, in 100 Masseteilen der Kautschukkomponente enthält und
der modifizierte Teil (E) eine funktionelle Gruppe enthält, die in der Lage ist, eine Säure-Base-Reaktion im Mischschritt mit dem Rest einer organischen Säure (A) und/oder der organischen Säure (D), die beim Mischen zugegeben worden sind, durchzumachen.

2. Kautschukzusammensetzung nach Anspruch 1, wobei die Kautschukzusammensetzung 3,5 Masseteile oder weniger der Komponente (A) pro 100 Masseteile der Polymerkomponente (B) enthält.

3. Kautschukzusammensetzung nach Anspruch 2, wobei die Kautschukzusammensetzung 1,0 Masseteile oder weniger der Komponente (A) pro 100 Masseteile der Polymerkomponente (B) enthält.

4. Kautschukzusammensetzung nach einem der Ansprüche 1 bis 3, wobei die Komponente (B) Naturkautschuk und/oder ein synthetisches Dienpolymer enthält.

5. Kautschukzusammensetzung nach Anspruch 4, wobei die Komponente (B) ein synthetisches Dienpolymer enthält, das durch Emulsionspolymerisation erhalten worden ist.

6. Kautschukzusammensetzung nach Anspruch 5, wobei die Komponente (B) ein Styrol-Butadien-Copolymer enthält, das durch Emulsionspolymerisation (E-SBR) erhalten wird.

7. Kautschukzusammensetzung nach einem der Ansprüche 1 bis 6, wobei der modifizierte Teil (E) eine funktionelle Gruppe enthält, die in der Lage ist, eine Säure-Base-Reaktion im Mischschritt mit dem Verstärkungsfüllstoff (C) durchzumachen.

8. Kautschukzusammensetzung nach einem der Ansprüche 1 bis 7, wobei der modifizierte Teil (E) in der Lage ist, eine Säure-Base-Reaktion im Mischschritt mit dem Rest einer organischen Säure (A) und/oder der organischen Säure (D), die beim Mischen zugegeben werden, durchzumachen, um ein Oniumkation zu bilden.

9. Kautschukzusammensetzung nach einem der Ansprüche 1 bis 8, wobei der modifizierte Teil (E) eine stickstoffhaltige funktionelle Gruppe enthält.

10. Kautschukzusammensetzung nach einem der Ansprüche 1 bis 9, wobei die Komponente (D) eine Fettsäureverbindung enthält.

11. Kautschukzusammensetzung nach einem der Ansprüche 1 bis 10, wobei der Rest einer organischen Säure (A), der bei einem Herstellungsvorgang des Polymers als Komponente (B) zugegeben worden ist, mindestens eine von einer Fettsäureverbindung, einer Harzsäureverbindung, einer Carbolsäureverbindung und einer Kolophoniumsäureverbindung enthält.

12. Kautschukzusammensetzung nach einem der Ansprüche 1 bis 10, wobei der Rest einer organischen Säure (A), der bei einem Herstellungsvorgang des Polymers als Komponente (B) zugegeben worden ist, ein Metallsalz einer Fettsäureverbindung, ein Metallsalz einer Harzsäureverbindung, ein Metallsalz einer Carbolsäureverbindung oder ein Metallsalz einer Kolophoniumsäureverbindung enthält.

13. Reifen umfassend die Kautschukzusammensetzung nach einem der Ansprüche 1 bis 12 als Laufflächenteil oder Seitenwandteil.

## Revendications

1. Composition de caoutchouc comprenant au moins 10 parties en masse, dans 100 parties en masse d'un composant de caoutchouc, d'un composant de polymère (B) contenant un résidu d'un acide organique (A) ajouté dans un procédé de production du polymère et comprenant de 10 à 150 parties en masse d'une charge de renforcement (C) et de 0,1 à 6 parties en masse au total du résidu d'un acide organique (A) et d'un acide organique (D) utilisés lors du mélange, pour 100 parties en masse du composant de caoutchouc,

où la composition de caoutchouc contient de 5 à 90 parties en masse d'un polymère modifié (F) contenant dans une structure moléculaire de celui-ci une portion modifiée (E) capable de réagir avec une surface de la charge dans une étape de mélange, dans 100 parties en masse du composant de caoutchouc, et
la portion modifiée (E) contient un groupe fonctionnel capable de subir une réaction acide-base dans l'étape de mélange avec le résidu d'un acide organique (A) et/ou l'acide organique (D) ajouté lors du mélange.

**2.** Composition de caoutchouc selon la revendication 1, où la composition de caoutchouc contient 3,5 parties en masse ou moins du composant (A) pour 100 parties en masse du composant de polymère (B).

**3.** Composition de caoutchouc selon la revendication 2, où la composition de caoutchouc contient 1,0 partie en masse ou moins du composant (A) pour 100 parties en masse du composant de polymère (B).

**4.** Composition de caoutchouc selon l'une quelconque des revendications 1 à 3, dans laquelle le composant (B) contient un caoutchouc naturel et/ou un polymère de diène synthétique.

**5.** Composition de caoutchouc selon la revendication 4, dans laquelle le composant (B) contient un polymère de diène synthétique qui est obtenu par une polymérisation en émulsion.

**6.** Composition de caoutchouc selon la revendication 5, dans laquelle le composant (B) contient un copolymère de styrène-butadiène qui est obtenu par une polymérisation en émulsion (E-SBR).

**7.** Composition de caoutchouc selon l'une quelconque des revendications 1 à 6, dans laquelle la portion modifiée (E) contient un groupe fonctionnel capable de subir une réaction acide-base dans l'étape de mélange avec la charge de renforcement (C).

**8.** Composition de caoutchouc selon l'une quelconque des revendications 1 à 7, dans laquelle la portion modifiée (E) est capable de subir une réaction acide-base dans l'étape de mélange avec le résidu d'un acide organique (A) et/ou l'acide organique (D) ajouté lors du mélange, pour former un cation d'onium.

**9.** Composition de caoutchouc selon l'une quelconque des revendications 1 à 8, dans laquelle la portion modifiée (E) contient un groupe fonctionnel contenant de l'azote.

**10.** Composition de caoutchouc selon l'une quelconque des revendications 1 à 9, dans laquelle le composant (D) contient un composé d'acide gras.

**11.** Composition de caoutchouc selon l'une quelconque des revendications 1 à 10, dans laquelle le résidu d'un acide organique (A) ajouté dans un procédé de production du polymère en tant que composant (B) contient au moins un parmi un composé d'acide gras, un composé d'acide résinique, un composé d'acide carbolique et un composé d'acide de colophane.

**12.** Composition de caoutchouc selon l'une quelconque des revendications 1 à 10, dans laquelle le résidu d'un acide organique (A) ajouté dans un procédé de production du polymère en tant que composant (B) contient un sel métallique d'un composé d'acide gras, un sel métallique d'un composé d'acide résinique, un sel métallique d'un composé d'acide carbolique ou un sel métallique d'un composé d'acide de colophane.

**13.** Pneu comprenant la composition de caoutchouc selon l'une quelconque des revendications 1 à 12 comme un élément de bande de roulement ou un élément de flanc.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002010392 A
- WO 2002002356 A
- JP 2004074960 A
- JP 2003521574 A
- JP 2003521575 A
- JP 2002521515 A
- JP 2002521516 A
- JP 2003530443 A
- JP 2003523472 A
- WO 2008123306 A
- EP 1736507 A
- US 2005049127 A
- WO 2001056813 A
- JP 2006167919 A